# EUROPEAN PATENT APPLICATION

(11) **EP 4 451 584 A1**
(43) Date of publication of application: **23.10.2024**
(21) Application number: 22906984.4
(22) Date of filing: 12.10.2022
(51) Int. Cl.: H04L 1/00, H04B 7/15, H04W 16/26, H04W 28/04, H04W 84/12

(54) **WIRELESS COMMUNICATION DEVICE AND METHOD**

(30) Priority: 15.12.2021 JP 2021203021
(71) Applicant: Sony Group Corporation, Tokyo 108-0075 (JP)
(72) Inventor: AIO, Kosuke, Tokyo 108-0075 (JP); TANAKA, Ken, 70327 Stuttgart (DE)
(74) Representative: D Young & Co LLP
(86) International application number: PCT/JP2022/037994
(87) International publication number: WO 2023/112449

(57) **Abstract**

The present technology relates to a wireless communication device and a method, in which packets can be efficiently relayed with low latency.

The wireless communication device performs direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output, and performs control to transmit the sequentially output data frames to a second another wireless communication device. The present technology can be applied to a wireless communication system.

## Description

### TECHNICAL FIELD

The present technology relates to a wireless communication device and method, and more particularly, to a wireless communication device and a method, in which packets can be efficiently relayed with low latency.

### BACKGROUND ART

In recent years, Home Mesh AP products for the purpose of expanding wireless LAN coverage in a home environment have attracted attention. Various operation modes are conceivable for a Home Mesh AP.

In Home Mesh APs, one AP is generally operated as a node that connects to the Internet (hereinafter, referred to as a "Source Node"), and the remaining APs are operated as relay nodes that deliver signals to the subordinate terminals via wireless communication (hereinafter, referred to as "Relay Nodes"). Such communication in multiple APs is called relay communication, and is expected to become widespread in offices and factories in the future.

In order to support a wide range of applications, a wireless LAN is expected to require not only high throughput but also various wireless characteristics such as low latency and high reliability.

In the relay communications of the related art, retransmission control is not performed between links, or packets are buffered in the Relay Node, which is incompatible with low latency and high reliability.

Therefore, MLO Relay that relays packets in the middle of a MAC layer of the Relay Node has attracted attention. In the MLO Relay, it is expected to perform relay communication with low latency and high reliability by reducing packet buffering in the Relay Node as much as possible while performing retransmission control in each link.

In the relay communication of the related art, a fronthaul link and a backhaul link normally operate separately. The transmission start determination in the fronthaul link is made when packets are stored in its own queue (MAC Buffer or Relay Buffer), and the stored packets are sequentially transmitted at any given time. At this time, the number of packets that can be aggregated at one time cannot be optimized, and there is a concern about an increase in transmission delay during the relay communication.

In response to this concern, Patent Document 1 proposes a new relay system. In the new relay system of Patent Document 1, packet maximum likelihood estimation is performed in the relay node, and then the packets are relayed.

### CITATION LIST

### PATENT DOCUMENT

Patent Document 1: Japanese Patent Application Laid-Open No. 2020-17808

### SUMMARY OF THE INVENTION

### PROBLEMS TO BE SOLVED BY THE INVENTION

However, in the relay system of patent Document 1, since the error detection for the packets is skipped in the backhaul link, there is a possibility that the packets with errors are transmitted through the fronthaul link as it is.

The present technology has been made in view of such a situation, and it is possible to relay the packets efficiently with low latency.

### SOLUTIONS TO PROBLEMS

According to a first aspect of the present technology, there is provided a wireless communication device including: a data processing unit that performs direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and a communication control unit that performs control to transmit the sequentially output data frame to a second another wireless communication device.

According to a second aspect of the present technology, there is provided a wireless communication device including a communication control unit that performs control to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to relay transmission to a first another wireless communication device to the second another wireless communication device.

In the first aspect of the present technology, direct relay transmission is performed in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and control is performed to transmit the sequentially output data frame to a second another wireless communication device.

In the second aspect of the present technology, control is performed to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to relay transmission to a first another wireless communication device to the second another wireless communication device.

### BRIEF DESCRIPTION OF DRAWINGS

Fig. 1 is a diagram illustrating a configuration example of a wireless communication system according to an embodiment of the present technology.
Fig. 2 is a block diagram illustrating a configuration example of a communication device operating as a Source Node.
Fig. 3 is a block diagram illustrating a configuration example of a communication device operating as a Relay Node.
Fig. 4 is a diagram illustrating a processing example in a data processing unit of Fig. 3.
Fig. 5 is a block diagram illustrating a configuration example of a communication device operating as an STA.
Fig. 6 is a diagram illustrating an example of relay communication of the related art.
Fig. 7 is a diagram illustrating an overall sequence according to a first embodiment.
Fig. 8 is a diagram illustrating a sequence for describing Relay Transmission of a phase Ph4 in Fig. 7.
Fig. 9 is a diagram illustrating a configuration example of a Direct Tx Request frame.
Fig. 10 is a diagram illustrating a configuration example of a Direct Tx Response frame.
Fig. 11 is a diagram illustrating a configuration example of a data frame for performing direct relay transmission.
Fig. 12 is a flowchart illustrating processing of a Relay Node at the time of receiving a Direct Tx Request frame.
Fig. 13 is a flowchart illustrating processing of a Relay Node at the time of receiving a data frame.
Fig. 14 is a diagram illustrating an image of cooperative operation between a data processing unit (MAC layer) and a signal processing unit (PHY layer).
Fig. 15 is a diagram illustrating a sequence for describing a first effect example of the present technology.
Fig. 16 is a diagram illustrating a sequence for describing a second effect example of the present technology.
Fig. 17 is a diagram illustrating a sequence for describing a third effect example of the present technology.
Fig. 18 is a diagram illustrating a sequence for describing a fourth effect example of the present technology.
Fig. 19 is a diagram illustrating a sequence for describing an outline of a second embodiment of the present technology.
Fig. 20 is a diagram illustrating a configuration example of a Direct Tx Stop Request frame.
Fig. 21 is a diagram illustrating a sequence for describing an outline of a third embodiment of the present technology.
Fig. 22 is a diagram illustrating a configuration example of a Direct Tx Request frame according to the third embodiment.
Fig. 23 is a diagram illustrating a sequence for describing an outline of a fourth embodiment of the present technology.
Fig. 24 is a diagram illustrating a configuration example of an A-MPDU subframe of the fourth embodiment.
Fig. 25 is a diagram illustrating a configuration example of a communication system according to a fifth embodiment of the present technology.
Fig. 26 is a diagram illustrating a sequence for describing a first effect example of the fifth embodiment.
Fig. 27 is a diagram illustrating a sequence for describing a second effect example of the fifth embodiment.
Fig. 28 is a diagram illustrating a configuration example of an A-MPDU subframe of the fifth embodiment.
Fig. 29 is a flowchart illustrating processing of an AP in Fig. 25.
Fig. 30 is a flowchart illustrating processing of an STA in Fig. 25.
Fig. 31 is a block diagram illustrating a configuration example of a computer.

### MODE FOR CARRYING OUT THE INVENTION

Hereinafter, a mode for carrying out the present technology will be described. The description will be given in the following order.
1. System configuration and device configuration
2. First embodiment
3. Second embodiment
4. Third embodiment
5. Fourth embodiment
6. Fifth embodiment
7. Others

### <1. System configuration and device configuration>

### <System configuration>

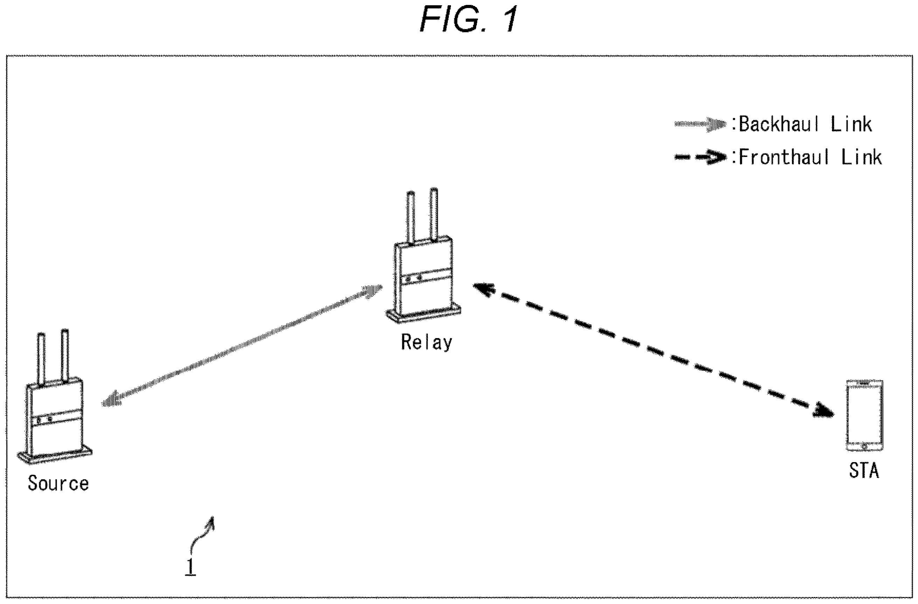

Fig. 1 is a diagram illustrating a configuration example of a wireless communication system according to an embodiment of the present technology.

A wireless communication system 1 of Fig. 1 includes two Access Points (APs, base Stations) and one STAtion (STA, terminal).

One of the two APs operates as a Source Node connected to WAN (the Internet). The other one of the two APs is not connected to the WAN and operates as a Relay Node that relays a signal from the Source Node to the STA as necessary. Note that the Source Node and the Relay Node perform cell formation.

In Fig. 1, a communication link between the Source Node and the Relay Node is referred to as a backhaul link. A communication link between the Relay Node and the STA is referred to as a fronthaul link. In the present description, it is assumed that these links operate at different center frequencies and can perform communication in parallel. That is, even when the Relay Node receives a signal on one link while a signal is transmitted on the other link, internal interference does not become a problem, and sufficient reception quality can be secured.

Note that, a target system configuration is not limited to the configuration of Fig. 1, it is only required that a plurality of communication devices between which a connection is established is present and a communication device is present as a peripheral terminal for each communication device, and no specific positional relationship is required as long as the above-described conditions are satisfied.

### <Configuration of communication device operating as Source Node>

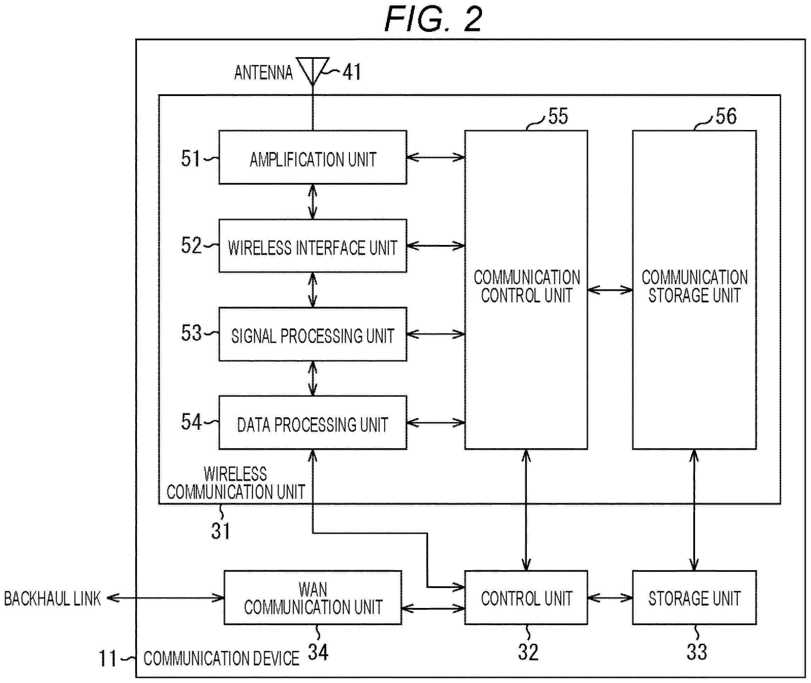

Fig. 2 is a block diagram illustrating a configuration example of a communication device operating as the Source Node.

A communication device 11 includes a wireless communication unit 31, a control unit 32, a storage unit 33, a WAN communication unit 34, and an antenna 41.

The wireless communication unit 31 transmits and receives data. The wireless communication unit 31 includes an amplification unit 51, a wireless interface unit 52, a signal processing unit 53, a data processing unit 54, a communication control unit 55, and a communication storage unit 56.

At the time of transmission, the amplification unit 51 amplifies an analog signal supplied from the wireless interface unit 52 to a predetermined power, and outputs the analog signal with the amplified power to the antenna 41. At the time of reception, the amplification unit 51 amplifies an analog signal supplied from the antenna 41 to a predetermined power, and outputs the analog signal with amplified power to the wireless interface unit 52.

A part of a function of the amplification unit 51 may be included in the wireless interface unit 52. Furthermore, a part of the function of the amplification unit 51 may be a component outside the wireless communication unit 31.

At the time of transmission, the wireless interface unit 52 converts a transmission symbol stream from the signal processing unit 53 into an analog signal, performs filtering, up-conversion to a carrier frequency, and phase control, and outputs the analog signal after the phase control to the amplification unit 51.

At the time of reception, the wireless interface unit 52 performs phase control, down-conversion, and reverse filtering on an analog signal supplied from the amplification unit 51, and outputs a reception symbol stream obtained as a result of conversion into a digital signal to the signal processing unit 53.

The signal processing unit 53 performs processing of a PHY layer (physical layer) of an OSI reference model. At the time of transmission, the signal processing unit 53 performs encoding, interleaving, modulation, and the like on a data frame supplied from the data processing unit 54, adds a physical header, generates a data signal (PPDU, PHY Protocol Data Unit), and outputs the data signal to each wireless interface unit 52.

At the time of reception, the signal processing unit 53 analyzes the physical header of the data signal supplied from each wireless interface unit 52, performs demodulation, deinterleaving, decoding, and the like on the data signal, and generates a data frame. The generated data frame is output to the data processing unit 54.

Note that the signal processing unit 53 performs complex channel characteristic estimation and spatial separation processing as necessary.

The data processing unit 54 performs processing of a media access control (MAC) layer of the OSI reference model. At the time of transmission, the data processing unit 54 performs sequence management and encryption processing on packets held in the communication storage unit 56 and a control signal and management information received from the communication control unit 55. After the encryption processing, the data processing unit 54 adds a MAC header and an error detection code to generate a data packet (MPDU, MAC Protocol Data Unit). Furthermore, the data processing unit 54 performs processing of aggregating a plurality of the data packets to generate a data frame (PSDU, PHY Service Data Unit).

At the time of reception, the data processing unit 54 deaggregates the received data frame, deaggregates a MAC header of each data packet, and performs analysis and error detection for each data packet, retransmission request operation, and reorder processing.

The communication control unit 55 controls operation of each component of the wireless communication unit 31 and information transmission between the components. Furthermore, the communication control unit 55 performs control to transfer a control signal and management information to be notified to another communication device to the data processing unit 54.

The communication storage unit 56 holds information to be used by the communication control unit 55. Furthermore, the communication storage unit 56 holds packets to be transmitted and received packets. A transmission buffer that holds packets to be transmitted is included in the communication storage unit 56.

The control unit 32 is constituted by a central processing unit (CPU), a read only memory (ROM), a random access memory (RAM), and the like. The control unit 32 executes a program stored in the ROM or the like, and controls the wireless communication unit 31 and the communication control unit 55. Furthermore, the control unit 32 may also perform part of the operation of the communication control unit 55 instead. Furthermore, the communication control unit 55 and the control unit 32 may be configured as one block.

The storage unit 33 holds information used by the wireless communication unit 31 and the control unit 32. Furthermore, the storage unit 33 may also perform part of the operation of the communication storage unit 56 instead. The storage unit 33 and the communication storage unit 56 may be configured as one block.

The WAN communication unit 34 analyzes the packets acquired from a WAN network, and transfers the analyzed packets to the wireless communication unit 31 via the control unit 32. The format of the transferred packets may be in a state in which an IP Header is left as it is (access point mode), or in a state in which the IP Header is analyzed and removed by the WAN communication unit 34, and a new IP Header is assigned (router mode).

Note that Fig. 2 assumes a configuration diagram in which the wireless communication unit 31 is configured as one IC, but the IC configuration of the present technology is not limited thereto. For example, the wireless interface unit 52 may be installed as another IC.

### <Configuration of communication device operating as Relay Node>

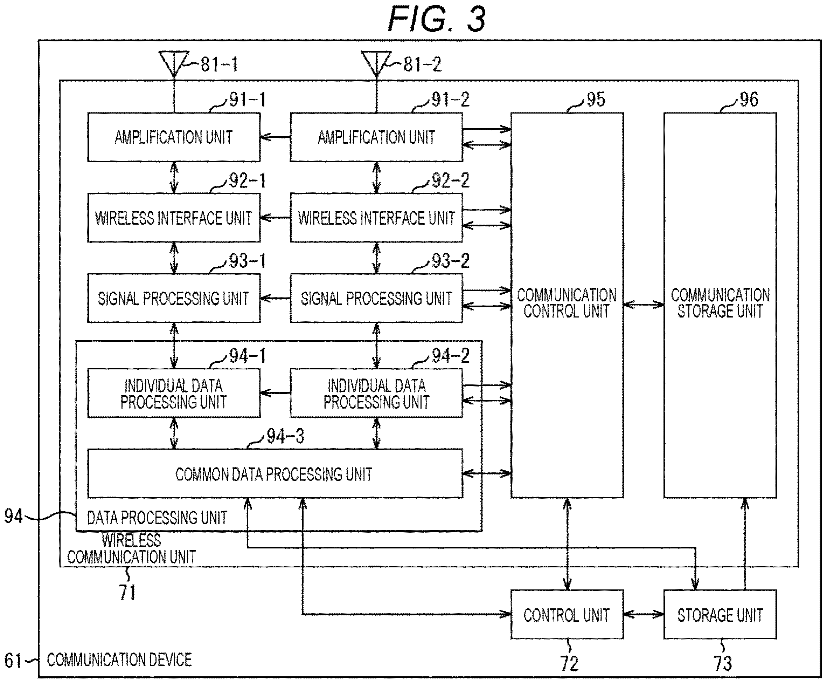

Fig. 3 is a block diagram illustrating a configuration example of a communication device operating as the Relay Node.

A communication device 61 includes a wireless communication unit 71, a control unit 72, a storage unit 73, and antennas 81-1 and 81-2. The antennas 81-1 and 81-2 are collectively referred to as an antenna 81 in a case where there is no need to be distinguished.

The control unit 72, the storage unit 73, and the antenna 81 in Fig. 3 have configurations similar to those of the control unit 32, the storage unit 33, and the antenna 41 in Fig. 2.

The wireless communication unit 71 includes amplification units 91-1 and 91-2, a wireless interface unit 92-1 and a wireless interface unit 92-2, and signal processing units 93-1 and 93-2. Furthermore, the wireless communication unit 71 includes a data processing unit 94, a communication control unit 95, and a communication storage unit 96.

Note that the amplification units 91-1 and 91-2, the wireless interface units 92-1 and 92-2, and the signal processing units 93-1 and 93-2 are collectively referred to as an amplification unit 91, a wireless interface unit 92, and a signal processing unit 93, respectively, in a case where there is no need to be distinguished.

The amplification unit 91, the wireless interface unit 92, the signal processing unit 93, the data processing unit 94, the communication control unit 95, and the communication storage unit 96 in Fig. 3 have configurations similar to those of the amplification unit 51, the wireless interface unit 52, the signal processing unit 53, the data processing unit 54, the communication control unit 55, and the communication storage unit 56 in Fig. 2.

That is, the wireless communication unit 71 is different from the wireless communication unit 31 of Fig. 2 in that the wireless communication unit 71 holds two or more of the amplification units 91, two or more of the wireless interface units 92, and two or more of the signal processing units 93 such that parallel processing can be performed for the backhaul link and the fronthaul link. Furthermore, the data processing unit 94 of the wireless communication unit 71 includes individual data processing units 94-1 and 94-2 that perform individual processing on the fronthaul link and the backhaul link, respectively, and a common data processing unit 94-3 that performs common processing.

### <Processing in data processing unit>

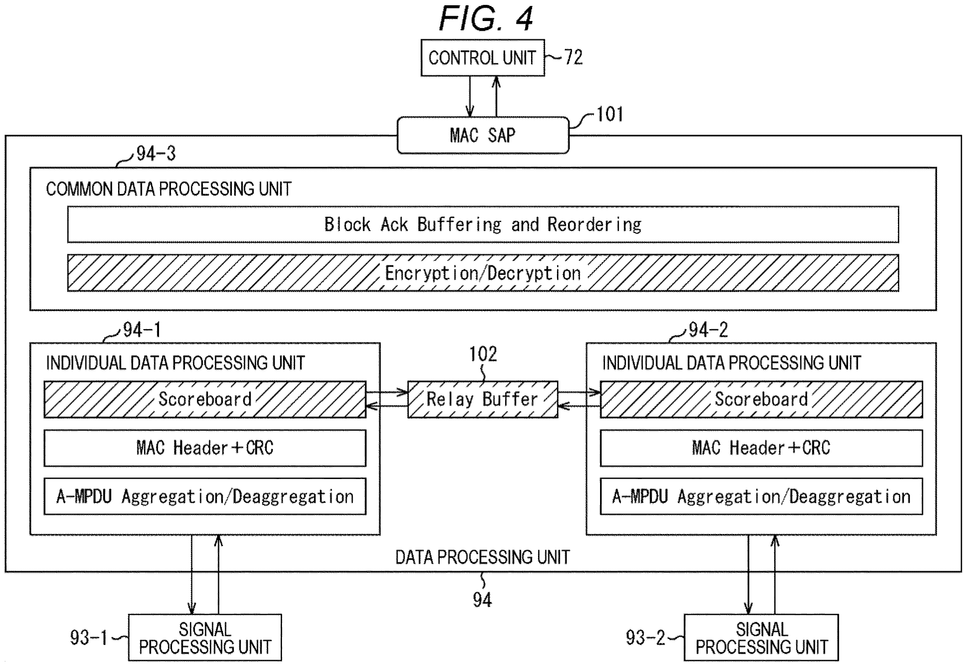

Fig. 4 is a diagram illustrating a processing example of the data processing unit 94 of Fig. 3.

In Fig. 4, the data processing unit 94 exchanges control signals, data, and the like with the control unit 72 via a MAC Service Access Point (SAP) 101.

In the data processing unit 94, processing of Block Ack Buffering and Reordering, Encryption/Decryption, Scoreboard, MAC Header + CRC Check, and A-MPDU Aggregation/Deaggregation are performed.

Specifically, as described above, at the time of transmission, the data processing unit 94 performs sequence management for data held in the communication storage unit 96 (hereinafter, referred to as MAC Buffer) and a control signal and management information received from the communication control unit 95, and performs Encryption processing.

After performing the encryption processing, the data processing unit 94 adds a MAC header and an error detection code (MAC Header + CRC Creation), and generates a packet. Furthermore, the data processing unit 94 performs processing of aggregating a plurality of the generated packets (A-MPDU Aggregation) to generate a data frame.

At the time of reception, the data processing unit 94 deaggregates the received data frame (A-MPDU Deaggregation), and performs MAC header analysis, error detection (MAC Header + CRC Check) and retransmission determination (Scoreboard) for a data packet generated by deaggregation. Moreover, the data processing unit 94 performs partial storage (Block Ack Buffering and Reordering) for decryption processing and reorder processing.

Here, in the data processing unit 94, Block Ack Buffering and Reordering and Encryption/Decryption are performed by a common data processing unit 94-3. In the data processing unit 94, Scoreboard, MAC Header + CRC Check, and A-MPDU Aggregation/Deaggregation are performed by individual data processing units 94-1 and 94-2, respectively. Moreover, in the data processing unit 94, a Relay Buffer 102 is provided between the individual data processing units 94-1 and 94-2. Note that, hereinafter, it is assumed that the individual data processing unit 94-1 is on the backhaul link side and the individual data processing unit 94-2 is on the fronthaul link side.

In the Relay Node, the individual data processing unit 94-1 performs the retransmission determination processing on the signal received from the backhaul link, and then transfers the signal from the individual data processing unit 94-2 to the fronthaul link via the Relay Buffer 102. Therefore, buffering before transmission to the fronthaul link can be avoided while maintaining the retransmission processing in each link.

Note that the configurations of the individual data processing units 94-1 and 94-2 correspond to the configuration of a "STA that is affiliated with the Relay Node" in the IEEE 802.11 standard.

These processing are performed by the individual data processing units 94-1 and 94-2 so as to be processed in parallel through the backhaul link and the fronthaul link. The individual data processing units 94-1 and 94-2 also exchange data with the control unit 72, but exchange of transmission/reception packets is performed with the subordinate signal processing units 93-1 and 93-2, respectively.

### <Configuration of communication device operating as STA>

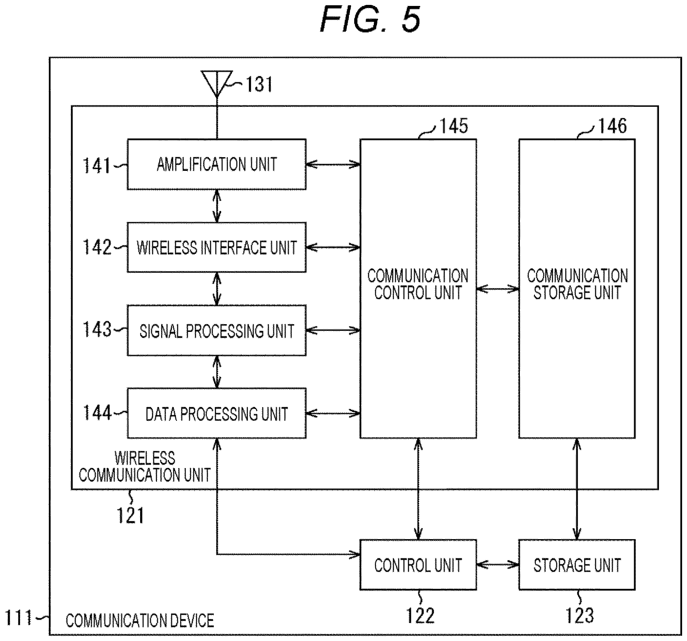

Fig. 5 is a block diagram illustrating a configuration example of the communication device operating as an STA.

A communication device 111 includes a wireless communication unit 121, a control unit 122, a storage unit 123, and an antenna 131. The antennas 131-1 and 131-2 are collectively referred to as an antenna 131 in a case where there is no need to be distinguished.

The control unit 122, the storage unit 123, and the antenna 131 in Fig. 5 have configurations similar to those of the control unit 32, the storage unit 33, and the antenna 41 in Fig. 2.

The wireless communication unit 121 includes an amplification unit 141, a wireless interface unit 142, a signal processing unit 143, a data processing unit 144, a communication control unit 145, and a communication storage unit 146.

The amplification unit 141, the wireless interface unit 142, the signal processing unit 143, the data processing unit 144, the communication control unit 145, and the communication storage unit 146 in Fig. 5 have configurations similar to those of the amplification unit 51, the wireless interface unit 52, the signal processing unit 53, the data processing unit 54, the communication control unit 55, and the communication storage unit 56 in Fig. 2.

Note that the configurations of the communication devices operating as the Source Node, the Relay Node, and the STA in Figs. 2, 3, and 5 all indicate the minimum configurations, and each may have another function. For example, the communication device 61 operating as the Relay Node may include a WAN communication unit, and the communication device 11 operating as the Source Node or the communication device 111 operating as the STA may include a plurality of amplification units, wireless interface units, signal processing units, and data processing units. Furthermore, in this case, as illustrated in Fig. 3, the data processing unit may be divided into two parts that are individual and common.

### <Relay communication of related art>

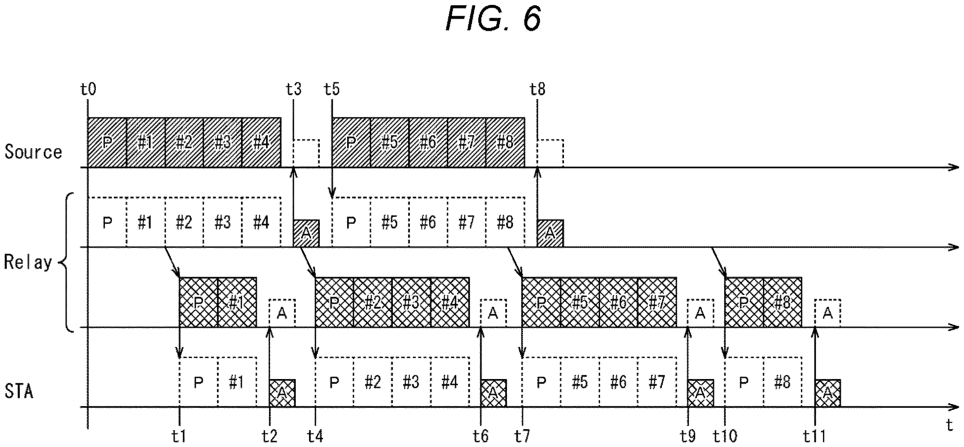

Fig. 6 is a diagram illustrating an example of relay communication of the related art.

Fig. 6 illustrates an example in which packets #1 to #8 are transmitted from the Source Node to the STA via the Relay Node.

Lines illustrated in Fig. 6 represent the Source Node, the backhaul link side of the Relay Node, the fronthaul link side of the Relay Node, and the STA in order from the top, and the arrows between the lines represent transmission and reception of data between the devices.

Note that in Fig. 6, the tip end of an arrow between the backhaul link side of the Relay Node and the fronthaul link side of the Relay Node indicates transmission timing on the fronthaul side. Furthermore, the base end of the arrow indicates, on the backhaul link side, up to which packet the error detection is completed and which packet is stored in the buffer at the transmission timing indicated by the tip end of the arrow among the received packets.

In Fig. 6, #1 to #8 represent packets #1 to #8, respectively. P represents a Preamble serving as a PHY header, and A represents Block Ack.

The Source Node starts transmission of the Preamble and the packets #1 to #4 to the Relay Node at timing t0.

The backhaul link side of the Relay Node starts to receive the Preamble and the packets #1 to #4 transmitted from the Source Node at timing t0. At that time, the backhaul link side of the Relay Node acquires the data packets #1 to #4 one by one, performs MAC header analysis and error detection, and then stores the corresponding packets in the buffer on the fronthaul link side.

After confirming that the packet #1 is stored in the buffer at timing t1, the fronthaul link side of the Relay Node generates a data frame including the Preamble and the packet #1, and start to transmit a data signal.

The STA receives the Preamble and the packet #1 transmitted at timing t1. At timing t2, the STA transmits Block Ack for the successfully received packet #1 to the fronthaul link side of the Relay Node.

At timing t3, the backhaul link side of the Relay Node transmits Block Acks for the successfully received packets #1 to #4 to the Source Node.

Furthermore, the backhaul link side of the Relay Node, the fronthaul link side of the Relay Node receives Block Ack transmitted from the STA at timing t2, confirms that the packets #2 to #4 are stored in the buffer at timing t4, and then generates a data frame including a Preamble and the packets #2 to #4 and starts to transmit the data signal.

The Source Node that receives Block Ack transmitted from the Relay Node at timing t3 starts to transmit the Preamble and the packets #5 to #8 to the Relay Node at timing t5.

The STA receives the Preamble and the packets #2 to #4 transmitted from the Relay Node at timing t4, and transmits Block Acks for the successfully received packets #2 to #4 to the fronthaul link side of the Relay Node at timing t6.

The backhaul link side of the Relay Node starts to receive the Preamble and the packets #5 to #8 transmitted from the Source Node at timing t5. At that time, the backhaul link side of the Relay Node acquires the data packets #5 to #8 one by one, performs MAC header analysis and error detection, and then stores the corresponding packets in the buffer on the fronthaul link side.

The fronthaul link side of the Relay Node that receives Block Ack transmitted from the STA at timing t6 confirms that the packets #5 to #7 are stored in the buffer at timing t7, and then generates a data frame including the Preamble and the packets #5 to #7 and starts to transmit the data signal.

Furthermore, at timing t8, the backhaul link side of the Relay Node transmits Block Acks for the successfully received packets #5 to #8 to the Source Node. The Source Node receives Block Ack transmitted from the Relay Node.

The STA receives the Preamble and the packets #5 to #7 transmitted from the Relay Node at timing t7, and transmits Block Acks for the successfully received packets #5 to #7 to the fronthaul link side of the Relay Node at timing t9.

The fronthaul link side of the Relay Node that receives Block Ack transmitted at timing t9 confirms that the packet #8 is stored in the buffer at timing t10, and then generates a data frame including the Preamble and the packet #8 and starts to transmit the data signal.

The STA receives the Preamble and the packet #8 transmitted from the Relay Node at timing t10. At timing t11, the STA transmits Block Ack for the successfully received packet #8 to the fronthaul link side of the Relay Node.

The fronthaul link side of the Relay Node receives Block Ack transmitted from the STA at timing t11, and the sequence of Fig. 6 ends.

As described above, the fronthaul link side of the Relay Node determines the number of data packets to be aggregated on the basis of only the packets stored in the buffer without considering the reception state on the backhaul link side of the Relay Node. Therefore, the number of times of transmission of the data frame on the fronthaul link side of the Relay Node is inevitably larger than that on the backhaul link side of the Relay Node.

When the number of times of transmission of the data signal increases, transmission of Preambles, Acks, and the like and a standby time between the frames become overhead, and transmission efficiency decreases accordingly. Therefore, in order to reduce the latency, it is important to reduce the number of times of transmission on the fronthaul link side of the Relay Node as much as possible.

Therefore, Patent Document 1 proposes a method of transmitting a data signal received on the backhaul link side also on the fronthaul link side at substantially the same time.

However, in the method proposed in Patent Document 1, since the error detection (FCS check) for the packet is not performed on the backhaul link side, there is a high possibility that unnecessary transmission occurs in a state in which the link quality is unstable, for example, the packet in which the error occurs is transmitted as it is on the fronthaul link side.

As described above, in the present technology, a method is proposed in which the backhaul link side and the fronthaul link side of the Relay Node cooperate with each other, and while performing error detection on a data signal being received on one link, a packet is relayed to the other link at substantially the same time.

According to the present technology, it is possible to implement a low latency and high-efficiency relay method in a wireless communication system including a wireless LAN.

Hereinafter, the present technology will be described in detail.

### <2. First embodiment>

### <Overall sequence>

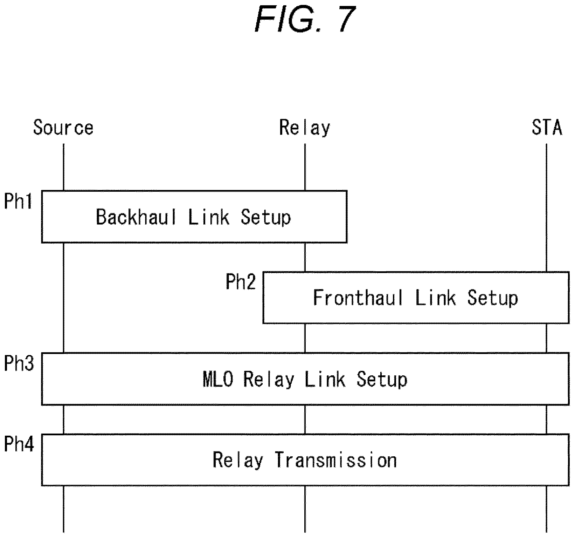

Fig. 7 is a diagram illustrating an overall sequence according to a first embodiment.

In a phase Ph1, the Source Node and the Relay Node perform Backhaul Link Setup which is link setup (connection processing setting, authentication processing setting, key exchange setting, Ack processing setting, and the like) between the Source Node and the Relay Node.

In a phase Ph2, the Relay Node and the STA perform Fronthaul Link Setup which is link setup (connection processing setting, authentication processing setting, key exchange setting, Ack processing setting, and the like) between the Relay Node and the STA.

In a phase Ph3, the Source Node and the STA perform MLO Relay Link Setup which is link setup (relay setting processing, key exchange, and the like) for performing data transmission from the Source Node to the STA by relaying the Relay Node.

In the phase Ph4, the Source Node and the STA perform Relay Transmission that is data transmission by relay.

### <Sequence of Relay Transmission>

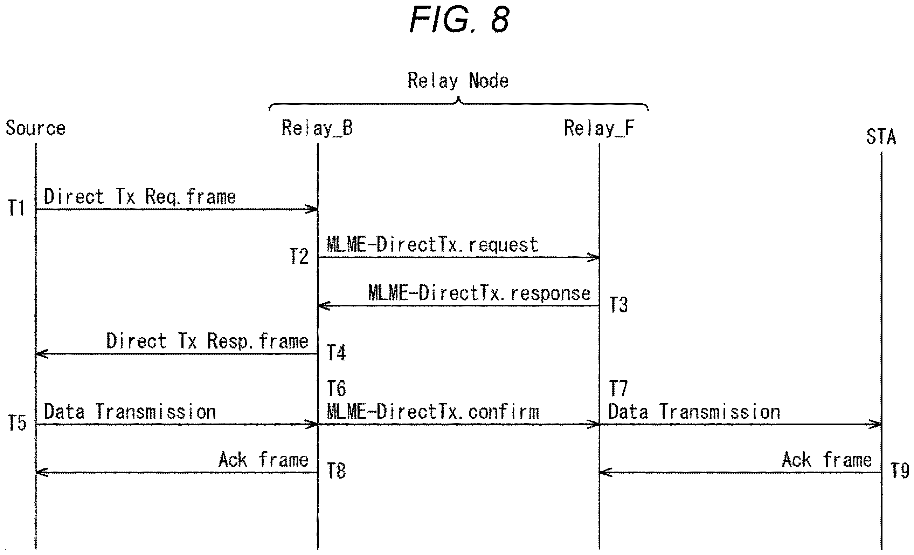

Fig. 8 is a diagram illustrating a sequence for describing Relay Transmission of the phase Ph4 in Fig. 7.

Note that, in Fig. 8, the Relay Node is illustrated separately as Relay_B (the backhaul link side of the Relay Node) and Relay_F (the fronthaul link side of the Relay Node).

In Fig. 8, a state is assumed in which the Source Node acquires a transmission right and transmits data to the STA. However, also in a case where the STA transmits data to the Source Node, the roles of the backhaul link and the fronthaul link are only reversed, and there is no essential difference in operation from the case of Fig. 8.

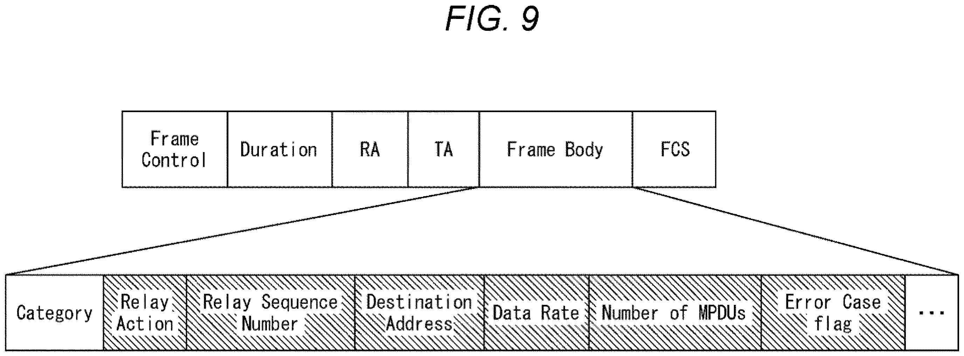

At timing T1, the Source Node transmits, to the Relay Node, a Direct Tx Request frame which is a request signal for direct relay transmission in which data to be transmitted on the backhaul link side is directly relayed to the fronthaul link side and transmitted. The Direct Tx Request frame includes an information group necessary for direct relay transmission. Details of the Direct Tx Request frame will be described later with reference to Fig. 9. The Relay Node receives the Direct Tx Request frame.

At timing T2 and timing T3, the Relay Node exchanges information between the backhaul link side and the fronthaul link side, and determines whether or not direct relay transmission is possible on the basis of at least one of a channel state of communication with the Source Node and its own buffer state. In a case where the direct relay transmission is performed, the Relay Node prepares a response signal to the request signal described above. A MAC Layer Management Entity (MLME) is used for this information exchange. The MLMEs, such as MLME-DirectTx.request for requesting direct relay transmission, MLME-DirectTx.response for responding to a request for direct relay transmission, and MLME-DirectTx.confirm for confirming direct relay transmission, are assumed.

However, the present technology is not limited thereto, and any information exchange may be performed as long as the backhaul link side can acquire the state of the fronthaul link side (such as the channel state and data rate information to be used).

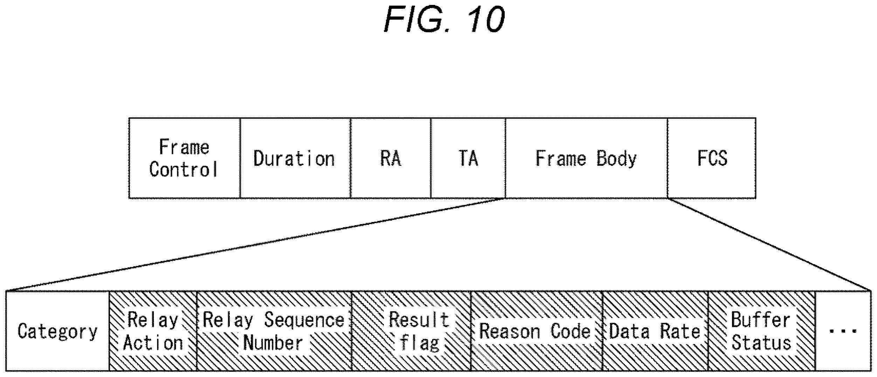

At timing T4, the Relay Node transmits a Direct Tx Response frame as a response signal to the Source Node. The Direct Tx Response frame includes a state indicating whether or not the direct relay transmission is possible and a necessary information group. Details of the Direct Tx Response frame will be described later with reference to Fig. 10. The Source Node receives the Direct Tx Response frame and sets the direct relay transmission on the basis of the information included in the Direct Tx Response frame.

When the setting of the direct relay transmission is completed, at timing T5, the Source Node transmits the data frame to the Relay Node as Data transmission. The backhaul link side of the Relay Node receives the data frame transmitted from the Source Node.

At timing T6, the backhaul link side of the Relay Node notifies the fronthaul link side of the Relay Node of MLME-DirectTx.confirm on the basis of the information in the data frame, and performs direct relay transmission.

At timing T7, the fronthaul link side of the Relay Node transmits the data frame to the STA as Data transmission. The STA receives the data frame transmitted from the Relay Node.

At timing T8, the backhaul link side of the Relay Node transmits, to the Source Node, an Ack frame which is a reception response of the received data frame. The Source Node receives the Ack frame transmitted from the Relay Node.

At timing T9, the STA transmits, to the Relay Node, the Ack frame which is the reception response of the received data frame. The fronthaul link side of the Relay Node receives the Ack frame transmitted from the STA. Thereafter, the sequence of Fig. 8 ends.

### <Configuration of Direct Tx Request frame>

Fig. 9 is a diagram illustrating a configuration example of the Direct Tx Request frame.

Fig. 9 illustrates a Direct Tx Request frame on the basis of an Action frame of IEEE 802.11. However, the present technology is not limited to the frame configuration of Fig. 9, and is only required to include at least a part of the following information. Furthermore, Fig. 9 illustrates the Direct Tx Request frame in the case of a MAC Frame, but the Direct Tx Request frame may be transmitted as a TCP/IP frame.

Note that, in Fig. 9, portions different from the related art are hatched. The same applies to the drawings illustrating the configuration example of the following Frame.

The Direct Tx Request frame includes fields of Frame Control, Duration, Receiver Address (RA), Transmitter Address (TA), Frame Body, and FCS.

Frame Control includes information indicating the type of Frame.

Duration includes information indicating the length of Frame.

RA includes information indicating a transmission destination address.

TA includes information indicating a transmission source address.

Frame Body includes a body of information to be transmitted. In the present technology, a Relay Action frame is included in a field of Frame Body.

In the case of Fig. 9, the Relay Action frame includes Category, Relay Action, Relay Sequence Number, Destination Address, Data Rate, Number of MPDUs, and Error Case flag.

Category includes information indicating that this Action frame is the Relay Action frame.

Relay Action includes information indicating the type of Relay Action frame. For example, in a case where Relay Action is zero, it indicates that the type of Relay Action frame is Direct Tx Request, and in a case where Relay Action is one, it indicates that the type of Relay Action frame is Direct Tx Response.

Relay Sequence Number includes an identification number of direct relay transmission. The identification number of the direct relay transmission is set by the request side. The response side uses a value designated by the request side as it is.

Destination Address includes reception destination address information. The reception destination address information is information indicating an STA that is a final destination. The reception destination address information may be a MAC address or other identification information.

Data Rate includes information regarding a data rate used by the Source Node on the backhaul link. The information regarding the data rate may be a numerical value of Bps as it is or may be index information that matches a table set in the standard.

Furthermore, the information regarding the data rate may not be a data rate numerical value itself, and may be information regarding a parameter group necessary for determining the data rate, such as a modulation and coding scheme (MCS), the number of transmission streams, a guard interval length, and the like.

Number of MPDUs includes the total number of data packets (MPDU) to be transmitted.

Error Case flag includes information indicating a countermeasure in a case where a packet error occurs on the backhaul link side during direct relay transmission. For example, in a case where Error Case flag is zero, the countermeasure is "do nothing", and in a case where Error Case flag is one, the countermeasure is "retransmitting a past packet".

### <Configuration of Direct Tx Response frame>

Fig. 10 is a diagram illustrating a configuration example of the Direct Tx Response frame.

The Direct Tx Response frame includes fields of Frame Control, Duration, RA, TA, Frame Body, and FCS. Note that, in Fig. 10, description of parts common to the example of Fig. 9 will be omitted.

Similarly to the case of Fig. 9, in the Frame Body, the Relay Action frame is included in the field of Frame Body.

In the case of Fig. 10, the Relay Action frame includes Category, Relay Action, Relay Sequence Number, Result Flag, Reason Code, Data Rate, and Buffer Status.

Result Flag is flag information indicating success or failure in setting the direct relay transmission. For example, in a case where Result Flag is zero, it indicates that the setting of the direct relay transmission is FAIL, and in a case where Result Flag is one, it indicates that the setting of the direct relay transmission is SUCESS.

Reason Code is information indicating a reason when the direct relay transmission fails to be set. In Reason Code, a combination of a value and a reason is determined in advance.

Data Rate includes information regarding a data rate used by the Relay Node on the fronthaul link. Regarding Data Rate, there is a difference only in whether the link to be used is the backhaul link or the fronthaul link, and regarding what kind of information is represented, it is the same as in the case of Fig. 9.

Buffer Status includes information indicating an empty state of the buffer in the Relay Node. The information indicating the empty state of the buffer may be the number of packets that can be stored, or may be flag information indicating whether or not all the number of packets transmitted by the Source Node can be stored.

### (Configuration of data frame)

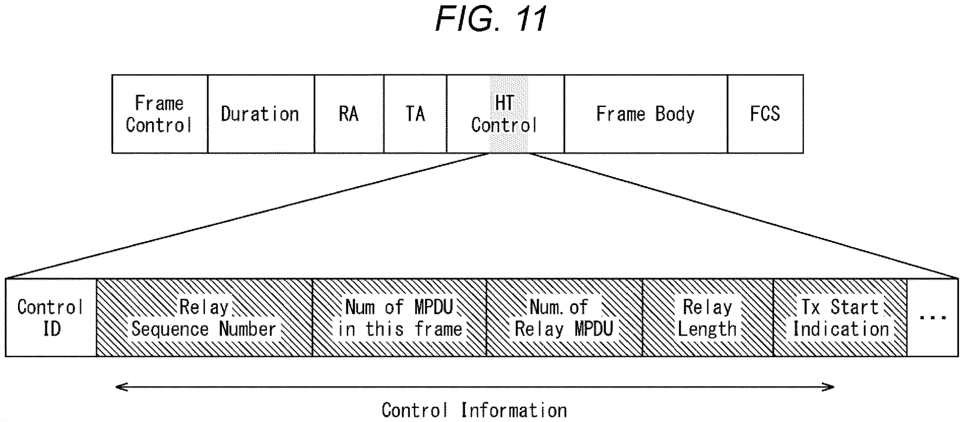

Fig. 11 is a diagram illustrating a configuration example of a data frame for performing direct relay transmission.

Fig. 11 illustrates that a necessary parameter group is stored in an HT Control field in the MAC header of IEEE 802.11. However, the frame configuration is not limited to the example of Fig. 11 as long as at least a part of the following information is included somewhere in the data frame (including a Preamble).

Furthermore, Fig. 11 illustrates the data frame in the case of the MAC frame, but the data frame may be transmitted as a TCP/IP frame.

Moreover, in a case where a plurality of data packets is aggregated in the data frame, basically all the data packets have the configuration illustrated in Fig. 11, but if possible, a first data packet may only carry a necessary information group.

The Data frame includes fields of Frame Control, Duration, RA, TA, HT Control, Frame Body, and FCS. Note that, in Fig. 11, description of parts common to the example of Fig. 9 will be omitted.

In Fig. 11, a part of HT Control includes control information necessary for performing direct relay transmission.

The control information includes Control ID, Relay Sequence Number, Number of MPDU in this frame, Number of Relay MPDU, Relay Length, and Tx Start Indication.

Control ID includes information indicating that a subsequent information group is an information group regarding direct relay transmission.

Relay Sequence Number includes an identification number of direct relay transmission. In the data frame, a value set in the Direct Tx Request frame is used as it is.

Number of MPDU in this frame includes information indicating the number of data packets (MPDU) included in this data frame.

Number of Relay MPDU includes information indicating the number of data packets (MPDU) which are desired to be directly relayed and transmitted.

In Number of Relay MPDU, basically, the same numerical value as the numerical value indicated by Number of MPDU in this frame is set. However, from the information of the Direct Tx Response frame notified from the Relay Node, in a case where the data rate of the fronthaul is slower than the backhaul, or in a case where it is known in advance that the packets stay in the Relay Buffer 102, only some packets may be directly relayed and transmitted. At that time, the number of some packets may be set in Number of Relay MPDU.

Note that a case where the data rate of the fronthaul is slower than the backhaul or a case where packets stay in the Relay Buffer 102 will be described later.

Relay Length includes information indicating a data length desired to be directly relayed and transmitted.

In Relay Length, basically, the same numerical value as a numerical value (L_LENGTH) indicating the data length included in the PHY header added to the data frame is set as information indicating the data length. However, as described above, only some packets may be directly relayed and transmitted. At that time, the data length of some packets may be set in Relay Length.

Tx Start Indication includes the number of data packets indicating how many data packets are received to start transmission. For example, in a case where Tx Start Indication is two, it indicates that transmission is started when the Relay Node receives two packets from the Source Node. Basically, in Tx Start Indication, one is set.

However, in a case where it is found from the information of the Direct Tx Response frame notified from the Relay Node that the data rate on the fronthaul link is faster than that on the backhaul link, information indicating that direct relay transmission of the Relay Node is started when not one packet is received but two or three packets are received (that is, after standby a little while) may be set by setting not one but two or three in Tx Start Indication.

### <Processing of Relay Node at time of receiving Direct Tx Request frame>

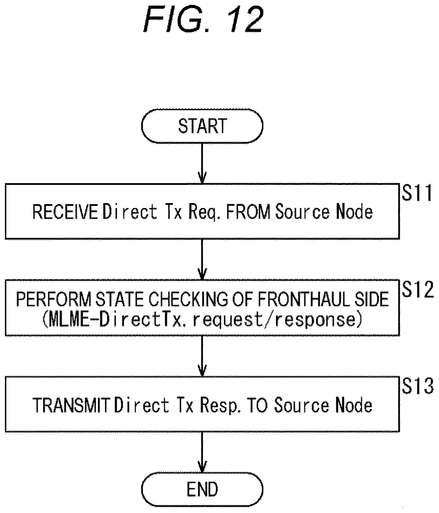

Fig. 12 is a flowchart illustrating processing of the Relay Node at the time of receiving a Direct Tx Request frame.

In Fig. 12, an example in which the Source Node acquires a transmission right and transmits data to the STA is shown as in Fig. 8. However, also in a case where the STA transmits data to the Source Node, the Source Node and the STA are only reversed, and there is no essential difference in operation.

Note that the processing of Fig. 12 is processing performed by the communication control unit 95 of the Relay Node controlling each component of the wireless communication unit 71.

In step S11, the communication control unit 95 of the Relay Node receives a Direct Tx Request frame transmitted from the Source Node.

In step S12, the communication control unit 95 exchanges MLME-DirectTx.request and MLME-DirectTx.response on the backhaul link side and on the fronthaul link side, and confirms the state of the fronthaul link side.

In step S13, the communication control unit 95 determines whether or not the direct relay transmission is possible, and transmits the Direct Tx Response frame to the Source Node.

Here, when determining whether or not the direct relay transmission is possible in step S13, it may be determined in the standard such that the direct relay transmission is determined to be possible in a case where all the following conditions are satisfied. Furthermore, whether or not the direct relay transmission is possible may be determined according to a device-specific condition.

1. When the fronthaul link side is in an idle state (that is, a channel is not occupied by another communication device)
2. When packets do not stay in the buffer and a sufficient empty state can be confirmed

Note that, in a case where it is determined in step S13 of Fig. 12 that the direct relay transmission is not possible, the Relay Node may not transmit the response signal to the Source Node.

### <Processing of Relay Node at time of receiving data frame>

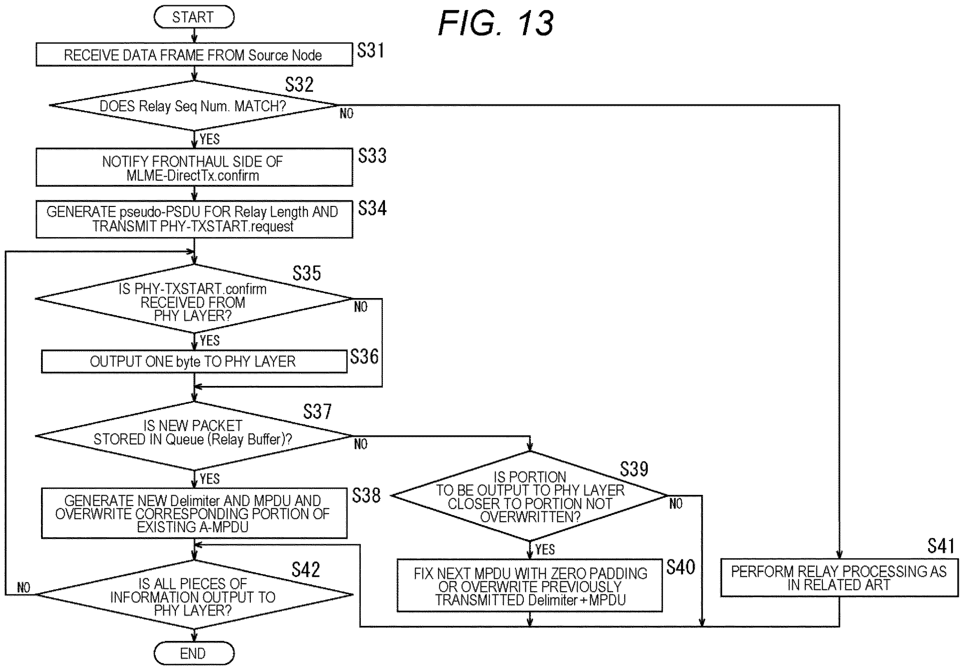

Fig. 13 is a flowchart illustrating processing of the Relay Node at the time of receiving the data frame.

Note that similarly to the processing of Fig. 12, the processing of Fig. 13 is also processing performed by the communication control unit 95 of the Relay Node controlling each component of the wireless communication unit 71.

In step S31, the backhaul link side of the Relay Node receives the data frame from the Source Node.

In step S32, the backhaul link side of the Relay Node checks whether Relay Sequence Number included in the first data packet in the data frame matches a value set in the Direct Tx Request frame or the Direct Tx Response frame.

In a case where it is determined in step S32 that Relay Sequence Number matches the setting in the Direct Tx Request frame or the Direct Tx Response frame, the processing proceeds to step S33.

In step S33, the backhaul link side of the Relay Node notifies the fronthaul link side of MLME-DirectTx.confirm, and starts preparation of direct relay transmission. That is, the processing after step S34 is direct relay transmission processing executed by the signal processing unit (PHY layer) 93-2 and the data processing unit (MAC layer) 94-2 on the fronthaul link side.

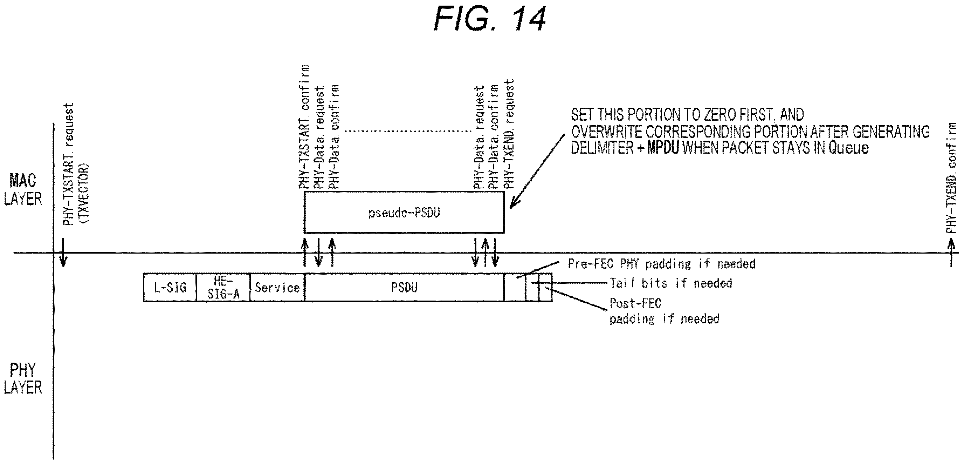

In step S34, the data processing unit (MAC layer) 94-2 on the fronthaul link side generates pseudo-PSDU which is a pseudo data frame (MAC processing frame; A-MPDU including EOP padding) in which the entire length corresponding to Relay Length included in the data packet is filled with "zero". Then, the data processing unit (MAC layer) 94-2 transmits PHY-TXSTART.request to the signal processing unit (PHY layer) 93-2. PHY-TXSTART.request is a request signal for requesting start of data transmission to the PHY layer. Details of the processing in step S34 and subsequent steps, that is, details of the direct relay transmission will be described later with reference to Fig. 14.

In step S35, the data processing unit (MAC layer) 94-2 determines whether or not PHY-TXSTART.confirm transmitted from the signal processing unit (PHY layer) 93-2 is received. PHY-TXSTART.confirm is a response signal corresponding to PHY-TXSTART.request. In a case where it is determined in step S35 that PHY-TXSTART.confirm transmitted from the signal processing unit (PHY layer) 93-2 is received, the processing proceeds to step S36.

In step S36, the data processing unit (MAC layer) 94-2 outputs (transmits) one byte of information to the signal processing unit (PHY layer) 93-2. That is, the information of the data frame is output by one byte at a time.

In a case where it is determined in step S35 that PHY-TXSTART.confirm transmitted from the signal processing unit (PHY layer) 93-2 is not received, the processing in step S36 is skipped, and the processing proceeds to step S37.

In step S37, the data processing unit (MAC layer) 94-2 determines whether or not a new packet is stored in the Relay Buffer 102 which is the queue managed by itself.

The data processing unit (MAC layer) 94-1 on the backhaul link side sequentially stores the packets for which the error correction is completed in the Relay Buffer 102 at the timing when it is received and the error detection is completed.

In a case where it is determined in step S37 that a new packet is stored in the Relay Buffer 102 which is the queue managed by itself, the processing proceeds to step S38.

In step S38, the data processing unit (MAC layer) 94-2 newly generates a delimiter and a data packet (MPDU) for aggregation processing from the corresponding packet, and overwrites the corresponding portion of the existing pseudo-PSDU stored in the data processing unit (MAC layer) 94-2. By overwriting, an actual data frame is generated.

Note that the portion to be overwritten is managed by the data processing unit (MAC layer) 94-2, but basically, the portion is overwritten in order from the head side of the pseudo data frame.

In a case where it is determined in step S37 that a new packet is not stored in the Relay Buffer 102 which is the queue managed by itself, the processing proceeds to step S39.

In step S39, the data processing unit (MAC layer) 94-2 determines whether or not a portion to be output to the signal processing unit (PHY layer) 93-2 is closer to a portion that has not been overwritten in the pseudo-PSDU. For example, in the pseudo-PSDU, it is determined whether or not the position of the portion to be output to the signal processing unit (PHY layer) 93-2 is closer to the position of the portion that is not overwritten as compared with a certain threshold (for example, 3 bytes).

In a case where it is determined in step S39 that the portion to be output to the signal processing unit (PHY layer) 93-2 is closer to the portion that has not been overwritten, that is, the timing of outputting to the signal processing unit (PHY layer) 93-2 is closer without being overwritten with a new packet, the processing proceeds to step S40.

In step S40, the data processing unit (MAC layer) 94-2 fixes the next data packet (MPDU) to the state of being written with "zero", and performs either outputting to the signal processing unit (PHY layer) 93-2 or outputting to the signal processing unit (PHY layer) 93-2 by overwriting the previously transmitted delimiter and data packet (MPDU) again.

On the other hand, in a case where it is determined in step S32 that Relay Sequence Number does not match a value used in the Direct Tx Request frame or the Direct Tx Response frame, the processing proceeds to step S41.

In step S41, for example, the Relay Node performs relay processing of the related art as illustrated in Fig. 6.

After Steps S38, S40, or S41, the processing proceeds to step S42.

Furthermore, in a case where it is determined in step S39 that the portion to be output to the signal processing unit (PHY layer) 93-2 is not closer to the portion that has not been overwritten, the processing proceeds to step S42.

In step S42, the data processing unit (MAC layer) 94-2 determines whether or not all pieces of information is output to the signal processing unit (PHY layer) 93-2. In a case where it is determined in step S42 that all the outputs is not transmitted to the signal processing unit (PHY layer) 93-2, the processing returns to step S35, and the processing in subsequent steps are repeated.

In a case where it is determined in step S42 that all pieces of the information is output to the signal processing unit (PHY layer) 93-2, the processing of the Relay Node at the time of receiving the data frame ends.

Note that the processing of each step described above is not necessarily performed in the order of the flowchart, and each processing may be performed as necessary.

As described above, in the Relay Node, pseudo-PSDU which is a pseudo data frame in which the packet of the data signal transmitted from the Source Node is set to the other information (zero) is generated. Furthermore, at a timing when each packet is received, error detection is completed, and the packets are accumulated in the Relay Buffer 102, direct relay transmission is performed in which information based on the received packet is overwritten on the pseudo-PSDU to generate a data frame, and the data frame is sequentially output.

That is, in this direct relay transmission, it is possible to prepare a pseudo data frame in order to enable transmission of an unacquired packet on the fronthaul link side for which an error is not detected on the backhaul link side.

Furthermore, each packet is received, and information based on the packet for which the error detection is completed is overwritten on the pseudo data frame, so that the data frame is sequentially output to the subsequent PHY layer by one bit at a time while being generated.

Thus, it is possible to relay the same data frame as the data frame acquired on the backhaul link side to the fronthaul link side with a short time lag.

As described above, data can be efficiently relayed with low latency.

### <Cooperative operation between data processing unit (MAC layer) and signal processing unit (PHY layer)>

Fig. 14 is a diagram illustrating an image of cooperative operation between the data processing unit (MAC layer) 94-2 and the signal processing unit (PHY layer) 93-2 on the fronthaul link side.

In Fig. 14, a horizontal axis represents time.

The data processing unit (MAC layer) 94-2 of the Relay Node generates pseudo-PSDU that is obtained by performing zero padding so that "zero" is written in the entire "A-MPDU including EOP padding", and notifies the signal processing unit (PHY layer) 93-2 of PHY-TXSTART.request.

The data processing unit (MAC layer) 94 receives PHY-TXSTART.confirm from the signal processing unit (PHY layer) 93, and repeats transmission of PHY-DATA.request and reception of PHY-DATA.confirm with the signal processing unit (PHY layer) 93 to transmit information to the signal processing unit (PHY layer) 93 by one byte at a time. PHY-DATA.request is a signal for requesting data transmission to the signal processing unit (PHY layer) 93, and PHY-DATA.confirm is a response signal to the PHY-DATA. request.

In parallel with the transmission of the information by one byte at a time, when a new packet is stored in the Relay Buffer 102 which is the queue, the data processing unit (MAC layer) 94 newly generates a delimiter for a data packet aggregation processing from the corresponding packet, and overwrites the portion of the pseudo-PSDU stored in the data processing unit (MAC layer) 94 with the delimiter and the data packet. The portion to be overwritten is managed by the data processing unit (MAC layer) 94, and basically, the pseudo-PSDU is overwritten sequentially from the left in the drawing, and the actual data frame is generated by the overwriting.

Thereafter, the overwritten information (partial information of the data frame) is output to the signal processing unit (PHY layer) 93 one byte at a time, and is transmitted to the STA on the fronthaul link for each packet.

Here, in a case where the information to be output to the signal processing unit (PHY layer) 93 is closer to a portion of the pseudo-PSDU that has not yet been overwritten, the data processing unit (MAC layer) 94 performs any one of the following processing.

(1) The next data packet (MPDU) is fixed in a state of being written with "zero", and is output to the signal processing unit (PHY layer) 93.
(2) The previously transmitted delimiter + data packet is overwritten again, and is output to the signal processing unit (PHY layer) 93.

Note that which one of (1) and (2) is to be performed is determined by an Error Case flag field in the Direct Tx Request frame. Basically, the latter is desirable, but in view of a problem of calculation capability of the Relay Node and a transmission state of the fronthaul link, a method of fixedly outputting while not overwriting anything may be selected. In this case, flag information indicating that the delimiter has no information may be added.

Note that, in a case where a memory for temporarily storing the above-described pseudo-PSDU is held, the data processing unit (MAC layer) 94 can use a value previously stored in the memory as it is.

### <First effect example>

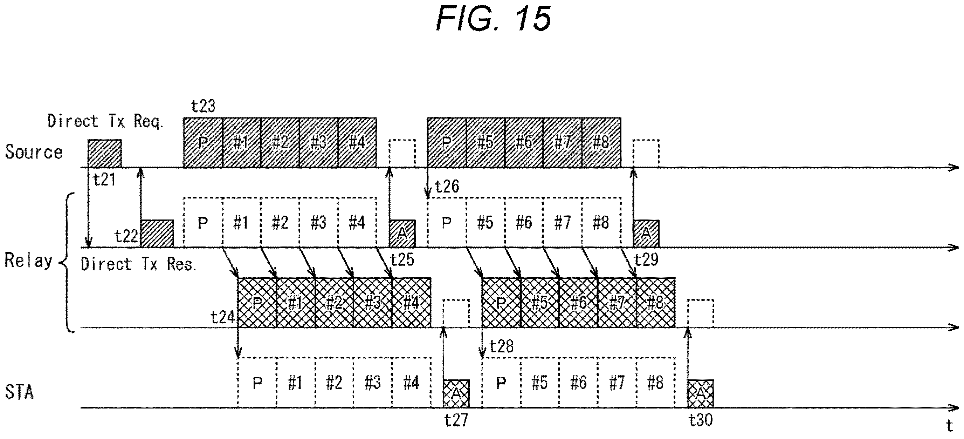

Fig. 15 is a diagram illustrating a sequence for describing a first effect example of the present technology.

Similarly to Fig. 6, Fig. 15 illustrates an example in which packets #1 to #8 are transmitted from the Source Node to the STA via the Relay Node.

The Source Node transmits a Direct Tx Request frame to the Relay Node at timing t21.

The Relay Node transmits a Direct Tx Response frame to the Source Node at timing t22.

The Source Node starts transmission of the Preamble and the packets #1 to #4 to the Relay Node at timing t23.

The backhaul link side of the Relay Node starts to receive the Preamble and the packets #1 to #4 transmitted from the Source Node at timing t23.

At this time, the backhaul link side of the Relay Node performs the above-described direct relay transmission with the fronthaul link side. By the direct relay transmission, the fronthaul link side of the Relay Node prepares pseudo-PSDU in order to transmit the unacquired packets #1 to #4 on the backhaul link side, and then sequentially overwrites the pseudo-PSDU with the packets #1 to #4 for which error detection is performed on the backhaul link side and which are accumulated in the Relay Buffer 102.

An actual data frame is generated by sequentially overwriting the corresponding portions of the pseudo-PSDU with the packets #1 to #4. That is, while the actual data frame is generated, the information in the data frame is sequentially output to the signal processing unit 93-2. The fronthaul link side of the Relay Node sequentially transmits the Preamble and the packets #1 to #4 to the STA at timing t24.

Specifically, when the packet #1 is transmitted to the STA, the packet #2 is overwritten and output to the signal processing unit 93, and when the packet #2 is transmitted to the STA, the packet #3 is overwritten and output to the signal processing unit 93. Furthermore, when the packet #3 is transmitted to the STA, the packet #4 is overwritten and output to the signal processing unit 93, and then, the packet #4 is transmitted to the STA.

At timing t25, the backhaul link side of the Relay Node transmits Block Acks for the successfully received packets #1 to #4 to the Source Node.

The Source Node that receives Block Ack transmitted from the Relay Node starts to transmit the Preamble and the packets #5 to #8 to the Relay Node at timing t26.

The backhaul link side of the Relay Node starts to receive the Preamble and the packets #5 to #8 transmitted from the Source Node at timing t26.

At this time, the backhaul link side of the Relay Node performs the above-described direct relay transmission with the fronthaul link side. By the direct relay transmission, the fronthaul link side of the Relay Node prepares pseudo-PSDU in order to transmit the unacquired packets #5 to #8 on the backhaul link side, and then sequentially overwrites the corresponding portions of the pseudo-PSDU with the packets #5 to #8 for which error detection is performed on the backhaul link side and which are accumulated in the Relay Buffer 102.

An actual data frame is generated by sequentially overwriting the corresponding portions of the pseudo-PSDU with the packets #5 to #8. That is, while the actual data frame is generated, the information in the data frame is output to the signal processing unit 93-2.

The STA that receives the Preamble and the packets #1 to #4 transmitted from the Relay Node transmits Block Acks for the successfully received packets #1 to #4 to the fronthaul link side of the Relay Node at timing t27.

The fronthaul link side of the Relay Node that receives Block Ack from the STA at timing t27 sequentially transmits the Preamble and the packets #5 to #8 to the STA at timing t28.

Furthermore, at timing t29, the backhaul link side of the Relay Node transmits Block Acks for the successfully received packets #5 to #8 to the Source Node. The Source Node receives Block Ack transmitted from the Relay Node.

The STA that receives the Preamble and the packets #5 to #8 transmitted from the Relay Node transmits Block Acks for the successfully received packets #5 to #8 to the fronthaul link side of the Relay Node at timing t30. The Relay Node receives Block Acks for the packets #5 to #8, and the sequence of Fig. 15 ends.

As described above, the sequence of Fig. 15 is different from the sequence of Fig. 6 in that Direct Tx Request and Direct Tx Response are exchanged between the Source Node and the Relay Node before data transmission, and direct relay transmission is performed by the Relay Node.

By the sequence of Fig. 15, it is possible to relay the same data frame as the data frame acquired on the backhaul link side to the fronthaul link side with a short time lag.

Moreover, unlike the sequence of Fig. 6 in which packets accumulated in the buffer are transmitted one by one without cooperation between the backhaul link and the fronthaul link, all the packets can be efficiently transmitted to the STA.

### <Second effect example>

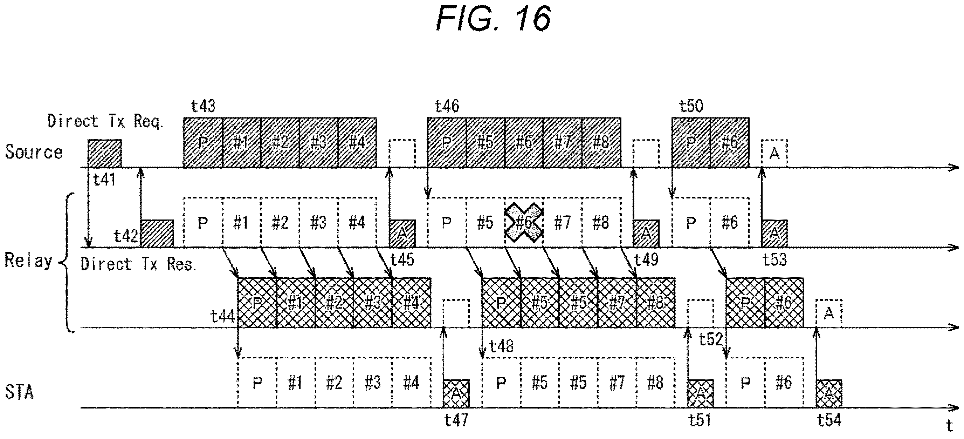

Fig. 16 is a diagram illustrating a sequence for describing a second effect example of the present technology.

Unlike Fig. 15, Fig. 16 illustrates an example in which the backhaul link side fails acquisition of the packet #6 when the packets #1 to #8 are transmitted from the Source Node to the STA via the Relay Node.

Note that at timings t41 to t47 of Fig. 16, processing basically similar to that at timings t21 to t27 of Fig. 15 are performed, and thus the description thereof will be omitted.

The Source Node that receives Block Ack transmitted from the Relay Node starts to transmit the Preamble and the packets #5 to #8 to the Relay Node at timing t46.

The backhaul link side of the Relay Node starts to receive the Preamble and the packets #5 to #8 transmitted from the Source Node at timing t46.

At this time, the backhaul link side of the Relay Node performs the above-described direct relay transmission with the fronthaul link side. By the direct relay transmission, the fronthaul link side of the Relay Node prepares pseudo-PSDU in order to transmit the unacquired packets #5 to #8 on the backhaul link side, and then sequentially overwrites the corresponding portions of the pseudo-PSDU with the packets #5 to #8 for which error detection is performed on the backhaul link side and which are accumulated in the Relay Buffer 102.

However, the backhaul link side of the Relay Node fails to acquire the packet #6. In this case, since the fronthaul link side of the Relay Node prepares for performing direct relay transmission including the packet #6, it is not possible to perform transmission without the packet #6 as it is.

The fronthaul link side of the Relay Node overwrites the corresponding portion of the pseudo-PSDU again with an already transmitted packet (for example, packet #5) instead of the packet #6. Thus, it is possible to avoid unnecessary transmission in which information of zero is transmitted as it is instead of the packet #6, and reliability is increased by transmitting the packet #5 twice, so that it is possible to achieve high reliability in transmission.

That is, an actual data frame is generated by sequentially overwriting the corresponding portions of the pseudo-PSDU with the packets #5, #5, #7, and #8. That is, while the actual data frame is generated, the information in the data frame is sequentially output to the signal processing unit 93-2. Therefore, the fronthaul link side of the Relay Node that receives Block Ack from the STA at timing t47 sequentially transmits the Preamble and the packets #5, #5, #7, and #8 to the STA at timing t48.

Furthermore, at timing t49, the backhaul link side of the Relay Node transmits Block Acks for the successfully received packets #5, #7, and #8 to the Source Node.

The Source Node that receives Block Ack transmitted from the Relay Node starts to transmit the Preamble and the packet #6 to the Relay Node at timing t50.

The backhaul link side of the Relay Node starts to receive the Preamble and the packet #6 transmitted from the Source Node at timing t50.

At this time, the backhaul link side of the Relay Node performs the above-described direct relay transmission with the fronthaul link side. By the direct relay transmission, the fronthaul link side of the Relay Node prepares pseudo-PSDU in order to transmit the unacquired packet #6 on the backhaul link side, and then overwrites the corresponding portions of the pseudo-PSDU with the packet #6 for which error detection is performed on the backhaul link side and which is accumulated in the Relay Buffer 102.

That is, by overwriting with the packet #6, an actual data frame is generated. That is, while the actual data frame is generated, the information in the data frame is sequentially output to the signal processing unit 93-2.

Furthermore, the STA that receives the Preamble and the packets #5, #5, #7, and #8 transmitted from the Relay Node transmits Block Acks for the successfully received packets #5, #7, and #8 to the fronthaul link side of the Relay Node at timing t51.

Therefore, the fronthaul link side of the Relay Node that receives Block Ack from the STA at timing t51 transmits the Preamble and the packet #6 to the STA at timing t52.

Furthermore, at timing t53, the backhaul link side of the Relay Node transmits Ack for the successfully received packet #6 to the Source Node. The Source Node receives Ack transmitted from the Relay Node.

The STA that receives the Preamble and the packet #6 transmitted from the Relay Node transmits Ack for the successfully received packet #6 to the fronthaul link side of the Relay Node at timing t54. The Relay Node receives Ack transmitted from the STA, and the sequence of Fig. 15 ends.

As described above, in the sequence of Fig. 16, in a case where there is a packet that cannot be acquired, the information based on the already transmitted packet (packet #5) is overwritten again on the information prepared for the packet that cannot be acquired. Thus, as described above, it is possible to avoid unnecessary transmission and achieve high reliability in transmission.

Note that, in a case where there is a packet that cannot be acquired, the information based on the already transmitted packet is not overwritten again as illustrated in Fig. 16, but may be transmitted without any information.

### <Third effect example>

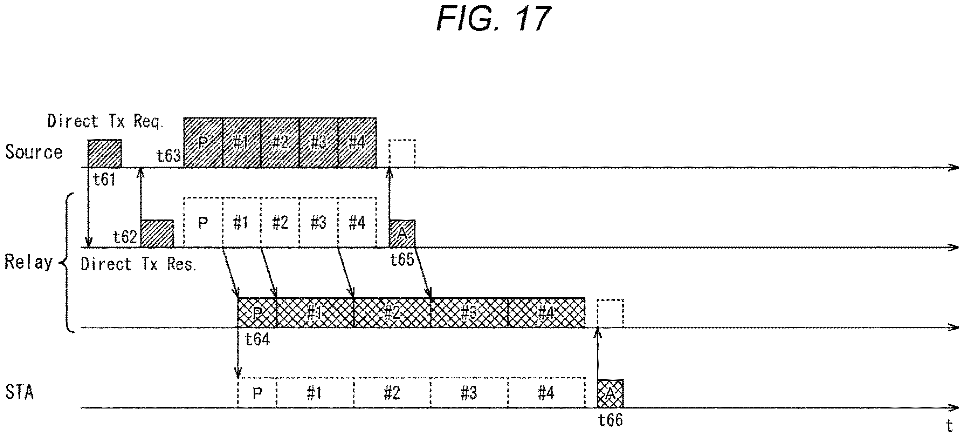

Fig. 17 is a diagram illustrating a sequence for describing a third effect example of the present technology.

Unlike Fig. 15, Fig. 17 illustrates an example in which a transmission rate on the fronthaul link side is slower than a transmission rate on the backhaul link side when the packets #1 to #4 are transmitted from the Source Node to the STA via the Relay Node.

Note that processing at timings t61 to t66 of Fig. 17 are different from the processing at timings t21 to t25 and t27 of Fig. 15 only in that the transmission rate on the fronthaul link side is slower than the transmission rate on the backhaul link side, and the processing basically similar to that at timings t21 to t25 and t27 of Fig. 15 are performed, so that the description thereof will be omitted.

That is, pieces of the data rate information used by the Source Node and the Relay Node can be exchanged by transmission and reception of the Direct Tx Request frame and the Direct Tx Response frame at timings t61 and t62. Thus, the Source Node can adjust the number of MPDUs and Relay Length to be transmitted at one time at the time of data frame transmission. Therefore, as illustrated in Fig. 17, even in a case where the transmission rate on the fronthaul link side is slower than the transmission rate on the backhaul link side, direct relay transmission can be performed.

### <Fourth effect example>

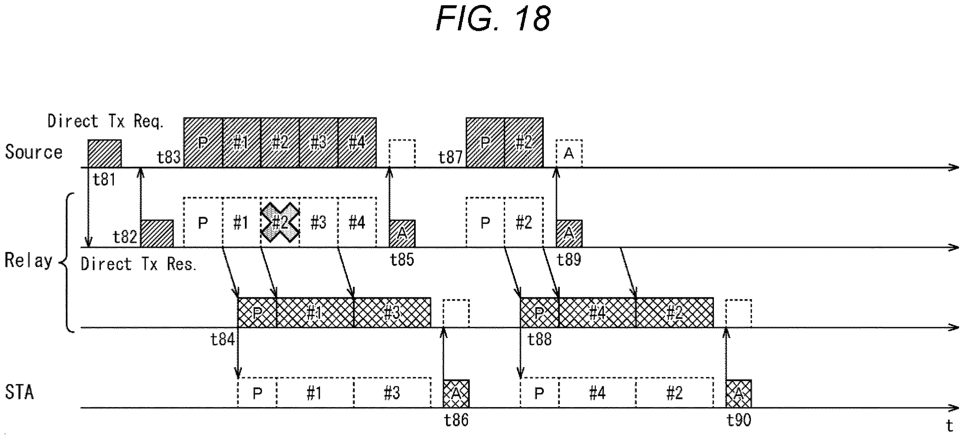

Fig. 18 is a diagram illustrating a sequence for describing a fourth effect example of the present technology.

Unlike Fig. 17, Fig. 18 illustrates an example in which in a case where the transmission rate on the fronthaul link side is slower than the transmission rate on the backhaul link side when the packets #1 to #4 are transmitted from the Source Node to the STA via the Relay Node, the number of MPDUs on the fronthaul link side and a data frame length (Relay Length) are adjusted.

Note that at timings t81 and t82 of Fig. 18, processing basically similar to that at the timings t21 and t22 of Fig. 15 are performed, and thus the description thereof will be omitted.

The Source Node starts transmission of the Preamble and the packets #1 to #4 to the Relay Node at timing t83.

The backhaul link side of the Relay Node starts to receive the Preamble and the packets #1 to #4 transmitted from the Source Node at timing t83.

At this time, the backhaul link side of the Relay Node performs the above-described direct relay transmission with the fronthaul link side. By the direct relay transmission, the fronthaul link side of the Relay Node prepares pseudo-PSDU in order to adjust the data frame length (Relay Length) of the unacquired packets #1 and #2 to be long and transmit the result on the backhaul link side, and then sequentially overwrites the corresponding portions of the pseudo-PSDU with the packets #1 and #2 for which error detection is performed on the backhaul link side and which are accumulated in the Relay Buffer 102.

However, the backhaul link side of the Relay Node fails to acquire the packet #2. In this case, since the fronthaul link side of the Relay Node prepares for performing direct relay transmission by adjusting the data frame length (relay length) to be long as described above, the next packet #3 is already accumulated in the Relay Buffer 102. Thus, the fronthaul link side of the Relay Node overwrites the next packet #3 instead of the packet #2.

That is, an actual data frame is generated by sequentially overwriting the corresponding portions of the pseudo-PSDU with the packets #1 and #3. That is, while the actual data frame is generated, the information in the data frame is sequentially output to the signal processing unit 93-2. Therefore, the fronthaul link side of the Relay Node sequentially transmits the Preamble and the packets #1 and #3 to the STA at timing t84.

Furthermore, at timing t85, the backhaul link side of the Relay Node transmits Block Acks for the successfully received packets #1, #3, and #4 to the Source Node.

The STA that receives the Preamble and the packets #1 and #3 transmitted from the Relay Node transmits Block Acks for the successfully received packets #1 and #3 to the fronthaul link side of the Relay Node at timing t86.

The Source Node that receives Block Ack transmitted from the Relay Node starts to transmit the Preamble and the packet #2 to the Relay Node at timing t87.

The backhaul link side of the Relay Node starts to receive the Preamble and the packet #2 transmitted from the Source Node at timing t87.

At this time, the backhaul link side of the Relay Node performs the above-described direct relay transmission with the fronthaul link side. By the direct relay transmission, the fronthaul link side of the Relay Node prepares pseudo-PSDU in order to transmit the unacquired packets #4 and #2 on the backhaul link side, and then sequentially overwrites the corresponding portions of the pseudo-PSDU with the packets #4 and #2 for which error detection is performed on the backhaul link side and which are accumulated in the Relay Buffer 102.

That is, the fronthaul link side of the Relay Node prepares for performing direct relay transmission including the packets #4 and #2. Therefore, the fronthaul link side of the Relay Node overwrites the corresponding portions of the pseudo-PSDU with the packet # 4 already accumulated in the Relay Buffer 102 and the packet #2 for which the error detection is completed now and which is accumulated in the Relay Buffer 102.

By overwriting with the packet #2, an actual data frame is generated. That is, while the actual data frame is generated, the information in the data frame is sequentially output to the signal processing unit 93. Therefore, the fronthaul link side of the Relay Node that receives Block Ack from the STA at timing t86 sequentially transmits the Preamble and the packets #4 and #2 to the STA at timing t88.

Furthermore, at timing t89, the backhaul link side of the Relay Node transmits Block Ack for the successfully received packet #2 to the Source Node. The Source Node receives Block Ack transmitted from the Relay Node.

The STA that receives the Preamble and the packets #4 and #2 transmitted from the Relay Node transmits Block Acks for the successfully received packets #4 and #2 to the fronthaul link side of the Relay Node at timing t90. The Relay Node receives Block Ack transmitted from the STA, and the sequence of Fig. 18 ends.

As described above, in Fig. 18, the number of MPDUs and the data frame length (Relay Length) on the fronthaul link side are adjusted, and even in a case where the data rates are different, the data frame length is adjusted to have the same data frame length, and transmission is performed.

Therefore, in the case of Fig. 18, the number of times of transmission on the fronthaul link side increases and the efficiency deteriorates as compared with Fig. 17. However, in the case of Fig. 18, as described above, even in a case where the packet #2 has an error on the backhaul link side, the packet #1 and the packet #3 can be transmitted on the fronthaul link side, and even in a case where a packet error occurs, it is possible to perform transmission without waste.

As illustrated in Fig. 17 or Fig. 18 described above, a plurality of methods of performing adjustment with the data rates can be considered, but an optimum method may be determined on the basis of, for example, a packet error rate on the backhaul link side or the number of aggregatable data packets on the fronthaul link side.

### <3. Second embodiment>

### <Outline>

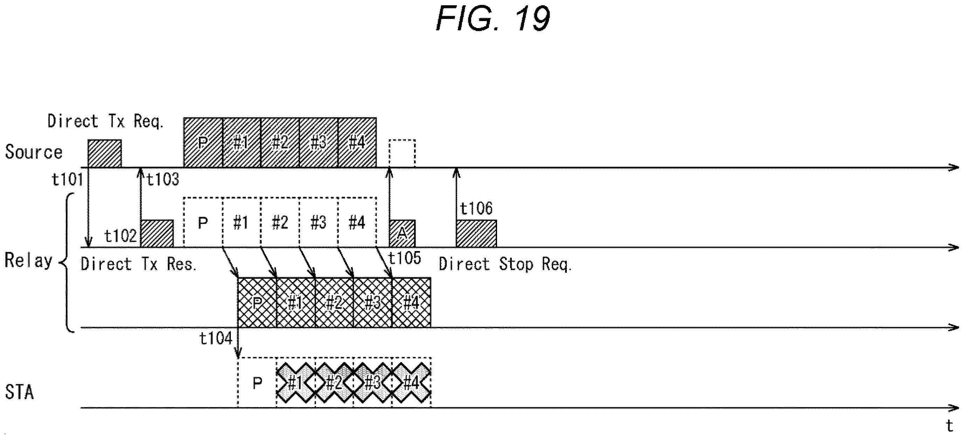

Fig. 19 is a diagram illustrating a sequence for describing an outline of a second embodiment of the present technology.

Unlike Fig. 15, Fig. 19 illustrates an example in which the STA fails acquisition of the packets #1 to #4 when the packets #1 to #4 are transmitted from the Source Node to the STA via the Relay Node.

Note that at timings t101 to t104 of Fig. 19, processing basically similar to that at timings t21 to t24 of Fig. 15 are performed, and thus the description thereof will be omitted.

At timing t104, the fronthaul link side of the Relay Node sequentially transmits the Preamble and the packets #1 to #4 to the STA.

However, the STA fails to acquire the packet #1 to #4 transmitted from the Relay Node.

Furthermore, at timing t105, the backhaul link side of the Relay Node transmits Block Acks for the successfully received packets #1 to #4 to the Source Node. The Source Node receives Block Ack transmitted from the Relay Node.

Here, since Block Ack is not transmitted from the STA even after a predetermined time elapses, the backhaul link side of the Relay Node transmits a Direct Tx Stop Request frame for temporarily interrupting the direct relay transmission to the Source Node at timing t106. The Source Node receives the Direct Tx Stop Request frame transmitted from the Relay Node and stops transmission of the subsequent packet.

That is, as illustrated in Fig. 19, in a case where the reception of all the packets fails on the STA side in the direct relay transmission on the fronthaul link side, the Relay Node needs to retransmit the packets #1 to #4 at the time of next transmission.

However, in the operation of the Relay Node and the Source Node in the first embodiment described above, the direct relay transmission of the subsequent data frame is performed, and retransmission of the packets #1 to #4 is not performed any more. Furthermore, in addition to the retransmission, in a case where certain packets stay in the buffer on the fronthaul link side, there is a possibility that the transmission timing of the staying packet is delayed by continuing the direct relay transmission.

Therefore, in the second embodiment, as illustrated in Fig. 19, for example, a method is added in which the relay node transmits the Direct Tx Stop Request frame to the Source Node in a case where a packet equal to or larger than a predetermined threshold stays in the buffer on the fronthaul link side.

The Source Node that receives the Direct Tx Stop Request frame can temporarily interrupt the direct relay transmission and prioritize the transmission of the packet staying in the buffer on the fronthaul link side.

### <Configuration of Direct Tx Stop Request frame>

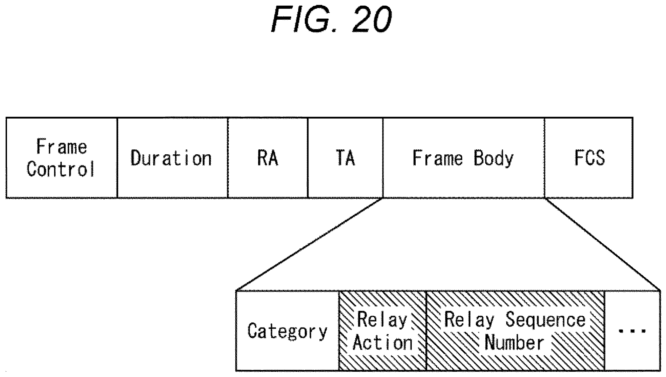

Fig. 20 is a diagram illustrating a configuration example of a Direct Tx Stop Request frame.

The Direct Tx Stop Request frame includes fields of Frame Control, Duration, RA, TA, Frame Body, and FCS. Note that, in Fig. 20, description of parts common to the example of Fig. 9 will be omitted.

Similarly to the case of Fig. 9, in the Frame Body, the Relay Action frame is included in the field of Frame Body.

In the case of Fig. 20, the Relay Action frame includes Category, Relay Action, and Relay Sequence Number.

Relay Action includes information indicating the type of Relay Action frame. For example, in a case where Relay Action is zero, it indicates that the type of Relay Action frame is Direct Tx Request, and in a case where Relay Action is one, it indicates that the type of Relay Action frame is Direct Tx Response. Moreover, in a case where Relay Action is two, it is indicated that the type of this Relay Action frame is Direct Tx Stop Request.

Relay Sequence Number includes an identification number for which direct relay transmission is desired to be interrupted.

### <4. Third embodiment>

### <Outline>

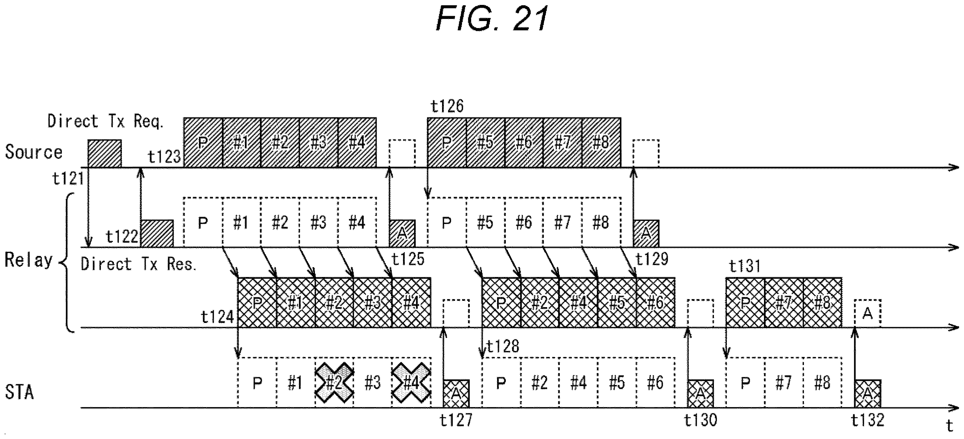

Fig. 21 is a diagram illustrating a sequence for describing an outline of a third embodiment of the present technology.

Unlike Fig. 15, Fig. 21 illustrates an example in which the STA fails acquisition of the packets #1 to #4 when the packets #2 and #4 are transmitted from the Source Node to the STA via the Relay Node.

Note that at timings t121 to t124 of Fig. 21, processing basically similar to that at the timings t21 to t24 of Fig. 15 are performed, and thus the description thereof will be omitted.

At timing t124, the fronthaul link side of the Relay Node sequentially transmits the Preamble and the packets #1 to #4.

However, the STA fails to acquire the packet #2 and #4 transmitted from the Relay Node.

Furthermore, at timing t125, the backhaul link side of the Relay Node transmits Block Acks for the successfully received packets #1 to #4 to the Source Node.

The Source Node that receives Block Ack transmitted from the Relay Node starts to transmit the Preamble and the packets #5 to #8 to the Relay Node at timing t126.

The backhaul link side of the Relay Node starts to receive the Preamble and the packets #5 to #8 transmitted from the Source Node at timing t126.

The STA that receives the Preamble and the packets #1 and #3 transmitted from the Relay Node transmits Block Acks for the successfully received packets #1 and #3 to the fronthaul link side of the Relay Node at timing t127.

The Relay Node receives Block Acks for the successfully received packets #1 and #3 transmitted from the STA at timing t127, and recognizes the packets #2 and #4 to be retransmitted.

At this time, in the third embodiment, the Direct Tx Request frame is notified by including Length information of each data packet in the frame. Therefore, in addition to the actual data portions of the packets #2 and #4 to be retransmitted, the Relay Node can grasp in advance how many packets can be added to this frame and transmitted from among the packets acquired on the backhaul link side, and what is the total length at that time.

The fronthaul link side of the Relay Node prepares pseudo-PSDU including a pseudo data portions of the packets #5 and #6 in addition to the actual data portions of the packets #2 and #4. Thus, at timing t128, the fronthaul link side of the Relay Node overwrites the corresponding portions of the pseudo-PSDU with the packets #5 and #6 in addition to the actual data portions of the packets #2 and #4.

An actual data frame is generated by overwriting the corresponding portions of the pseudo-PSDU with the packets #5 and #6. That is, while the actual data frame is generated, the information in the data frame is sequentially output to the signal processing unit 93-2.

Furthermore, at timing t129, the backhaul link side of the Relay Node transmits Block Acks for the successfully received packets #5 to #8 to the Source Node. The Source Node receives Block Acks for the packets #5 to #8 from the Relay Node.

The STA that receives the Preamble and the packets #2 and #4 to #6 transmitted from the Relay Node transmits Block Acks for the successfully received packets #2 and #4 to #6 to the fronthaul link side of the Relay Node at timing t130.

The Relay Node receives Block Acks for the successfully received packets #2 and #4 to #6 transmitted from the STA at timing t130.

The fronthaul link side of the Relay Node prepares for performing normal relay transmission including the packets #7 and #8. Therefore, at timing t131, the fronthaul link side of the Relay Node generates an actual data frame with the packets #7 and #8 already accumulated in the Relay Buffer 102.

Then, the information (packets #7 and #8) in the data frame is sequentially output to the signal processing unit 93-2. Therefore, the fronthaul link side of the Relay Node that receives Block Ack from the STA at timing t130 sequentially transmits the Preamble and the packets #7 and #8 to the STA at timing t131.

The STA that receives the Preamble and the packets #7 and #8 transmitted from the Relay Node transmits Block Acks for the successfully received packets #7 and #8 to the fronthaul link side of the Relay Node at timing t132. The Relay Node receives Block Acks for the packets #7 and #8 from the STA, and the sequence of Fig. 21 ends.

### <Configuration of Direct Tx Request frame>

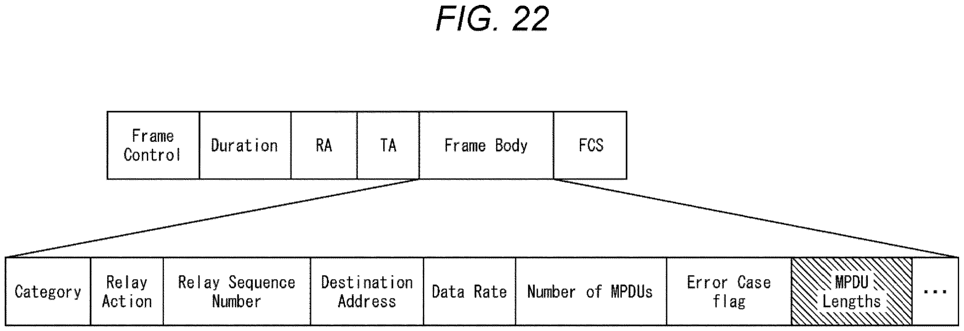

Fig. 22 is a diagram illustrating a configuration example of a Direct Tx Request frame according to the third embodiment.

The Direct Tx Request frame includes fields of Frame control, Duration, RA, TA, Frame Body, and FCS. Note that, in Fig. 22, description of parts common to the example of Fig. 9 will be omitted.

Similarly to the case of Fig. 9, in the Frame Body, the Relay Action frame is included in the field of Frame Body.

In the case of Fig. 22, the Relay Action frame includes Category, Relay Action, Relay Sequence Number, Destination Address, Data Rate, Number of MPDUs, Error Case flag, and MPDU Lengths.

That is, the Relay Action frame in Fig. 22 is different from the Relay Action frame in Fig. 9 in that MPDU Lengths is added.

In MPDU Lengths, all the Lengths of MPDUs #1 to #n are sequentially notified, or for example, MPDUs of the same Length, such as 1500 bytes for MPDUs #1 to #k and 1000 bytes for MPDUs #k+1 to #n, are collectively notified.

Note that the content of the field of MPDU Lengths is not particularly limited, and may have the above-described configuration. Furthermore, the length may be indicated in a format in which the number of bytes is notified as it is or in a format in which a row number is designated according to a table defined in the standard.

### <5. Fourth embodiment>

Next, as a fourth embodiment, an example in which the STA is switched to a power saving (doze) mode according to a packet acquisition state on the backhaul link side will be described.

### <Outline>

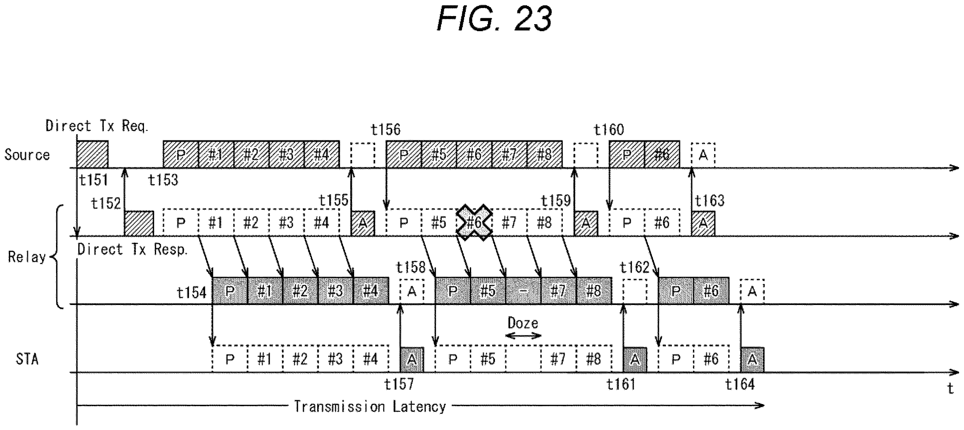

Fig. 23 is a diagram illustrating a sequence for describing an outline of the fourth embodiment of the present technology.

Similarly to Fig. 16, Fig. 23 illustrates an example in which the backhaul link side fails acquisition of the packet #6 when the packets #1 to #8 are transmitted from the Source Node to the STA via the Relay Node.

Note that at timings t151 to t157 and t159 to t164 of Fig. 23, processing basically similar to that at the timings t41 to t47 and t49 to t54 of Fig. 16 are performed, and thus the description thereof will be omitted.

In Fig. 16 described above, the already transmitted packet (for example, packet #5) is overwritten again on the corresponding portion of the pseudo-PSDU instead of the packet #6 of which acquisition fails, and the Preamble and the packets #5, #5, #7, and #8 are sequentially transmitted to the STA at timing t48.

On the other hand, in Fig. 23, the corresponding portion of the pseudo-PSDU is emptied, and the Preamble and the packet #5, an empty portion (in the figure, -), #7, and #8 are sequentially transmitted to the STA at timing t158.

At that time, the fronthaul link side of the Relay Node includes skip flag information in MPDU Delimiter transmitted immediately after the packet #5, and empties the packet instead of overwriting the portion with the packet #6. The skip flag information is information that permits indication of "the next packet is empty, and data acquisition processing is skipped" for the STA.

Note that "packet is empty" means a state in which a packet is padded with zero or a state in which random information is contained in the packet.

That is, an actual data frame is generated by sequentially overwriting the corresponding portions of the pseudo-PSDU with the packets #5, empty, #7, and #8. That is, while the actual data frame is generated, the information in the data frame is sequentially output to the signal processing unit 93-2. Therefore, the fronthaul link side of the Relay Node that receives Block Ack from the STA at timing t157 sequentially transmits the Preamble and the packets #5, empty, #7, and #8 to the STA at timing t158.

The STA receives the Preamble and the packets #5, empty, #7, and #8 transmitted from the Relay Node. At that time, the STA that acquires the skip flag information included in MPDU Delimiter immediately after the packet #5 skips the data acquisition processing for the corresponding portion to which the packet #6 is scheduled to be transmitted, and temporarily operates in the power saving mode.

Here, the skipped "data acquisition processing" is a part of the reception processing, and means processing in the data processing unit (MAC layer) 144 in the block diagram of Fig. 5.

As described above, in the Relay Node, the power consumption of the STA can be reduced by temporarily switching the STA to the power saving mode according to a packet acquisition state on the backhaul link side at the time of direct relay.

Note that whether to reduce the power consumption of the STA by performing the processing of Fig. 23 or whether to improve the reliability by overwriting the transmitted packet as illustrated in Fig. 16 may be determined, for example, by an intention of an implementer of the wireless communication system 1, or the Relay Node may acquire some information from the STA and perform selection on the basis of the acquired information.

For example, when acquiring the remaining battery information from the STA and determining that the remaining battery is low on the basis of the remaining battery information, the AP may switch the operation from the operation of Fig. 16 to the operation of Fig. 23.

### <Configuration example of A-MPDU subframe>

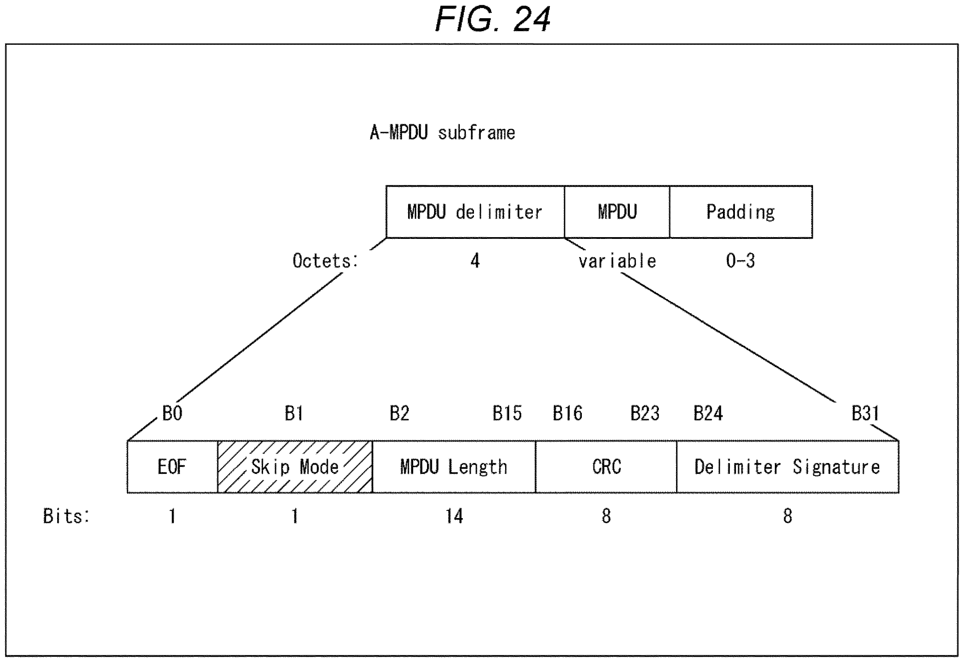

Fig. 24 is a diagram illustrating a configuration example of an A-MPDU subframe of the fourth embodiment.

Fig. 24 illustrates an example in which one bit of the following Skip Mode is added to MPDU Delimiter in the A-MPDU subframe of IEEE 802.11.

The A-MPDU subframe includes MPDU Delimiter, MPDU, and Padding.

MPDU Delimiter in Fig. 24 includes one bit of EOF, one bit of Skip Mode, 14 bits of MPDU Length, 8 bits of CRC, and 8 bits of Delimiter Signature.

One bit of Skip Mode is skip flag information that permits skipping of the data acquisition processing. In a case where Skip Mode indicates one, the STA skips the data acquisition processing of the packet (MPDU/Padding) subsequent to MPDU Delimiter.

### <6. Fifth embodiment>

### <System configuration>

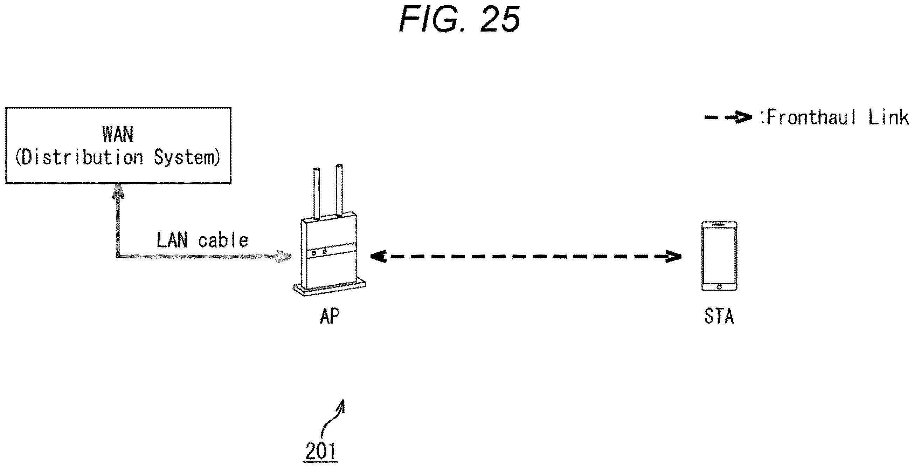

Fig. 25 is a diagram illustrating a configuration example of a communication system according to a fifth embodiment of the present technology.

In Fig. 25, unlike the wireless communication system 1 of Fig. 1, a communication system 201 does not have a configuration of wireless relay communication.

The wireless communication system 201 of Fig. 25 includes one AP and one STA. In the communication system 201, for example, the AP acquires a packet addressed to the STA from a wide area network (WAN) or a distribution system connected by a LAN cable, and transmits the packet to the STA by wireless communication.

From a broad viewpoint, in the communication system 201, the Source Node is on the WAN side, and the AP can be considered as the Relay Node that relays the packet addressed to the STA. Therefore, the direct relay transmission of the present technology can also be applied to the case in Fig. 25.

In this case, a communication link between the Source Node on the WAN side and the AP is a backhaul link (WAN), and a communication link between the AP and the STA is a fronthaul link (Wireless LAN (WLAN)).

Furthermore, the AP in the communication system 201 of Fig. 25 is configured similarly to the AP (for example, the communication device 11 in Fig. 2) of the wireless communication system 1 of Fig. 1. The STA in the communication system 201 is configured similarly to the STA (for example, the communication device 111 in Fig. 5) of the wireless communication system 1 of Fig. 1.

Note that Fig. 25 illustrates an example in which the AP is connected to the WAN by wire such as a LAN Cable, but the AP and the WAN may be wirelessly connected.

In a case where the AP can exchange information with the Source Node on the WAN side, as illustrated in Fig. 8, it is easy to exchange Direct Tx Request and Direct Tx Response and perform the operation described above with reference to the first to fourth embodiments.

However, in practice, the AP cannot cooperate with the Source Node on the WAN side, and it is often difficult to exchange information such as Direct Tx Request and Direct Tx Response. That is, after acquiring the first packet (MSDU) from the WAN, it is difficult for the AP to grasp information such as how much data will arrive consecutively and when it will arrive. Furthermore, in a case where packet transmission from the WAN is interrupted due to unexpected congestion or the like of the network on the WAN side, it is also impossible to predict when the next packet will arrive.

As described above, in order to realize direct relay transmission even in a case where information exchange is difficult, the following two operations are newly defined in the fifth embodiment.

### (1) Start determination and data length determination of direct relay transmission

The AP determines the start of direct relay transmission on the basis of the destination STA, the traffic type, and the like. For example, the AP may determine to start the direct relay transmission in a case where the traffic is required to be transmitted with low latency. Furthermore, the AP may determine to start the direct relay transmission in a case where the number of STAs in the cell is small and it can be predicted that packets to the STA arrive consecutively. Furthermore, the AP may determine to start the direct relay transmission in a case where a plurality of the packets is accumulated in the buffer.

The AP determines the data length in the direct relay transmission as an estimation value. For example, the AP sets the average value or the longest value of the data length as the data length with reference to the past packet amount and the arrival time. Furthermore, the data length may be determined by machine learning.

The AP performs direct relay transmission by a predetermined data length. In a case where the AP directly relays and transmits the packet transmitted from the WAN, when the AP determines that the packet exceeds a predetermined data length, the AP does not directly relay and transmit the packet.

### (2) Response to unexpected congestion on backhaul link (WAN) side

In a case where there is no packet that can be transmitted during transmission on the fronthaul link (WLAN) side, the AP notifies the STA of the fact and causes the STA to transition to the power saving mode. Furthermore, in the power saving mode, the AP continues to transmit pseudo data. The STA discards the received signal after the FFT processing. That is, the STA does not perform the data acquisition processing.

The following two methods in which the STA cancels the power saving mode are conceivable.
(a) STA continues Skip Mode by Length of Delimiter (MPDU Length information included in Delimiter)
(b) Transmit known sequence signal (example: new STF) from AP and cancel power saving mode of STA

Note that the method of (a) is simple but lacks flexibility. The method of (b) has excellent flexibility but high implementation difficulty.

Hereinafter, the operation by the implementation method of (2) that requires information exchange between the AP and the STA will be mainly described.

### <First effect example of fifth embodiment>

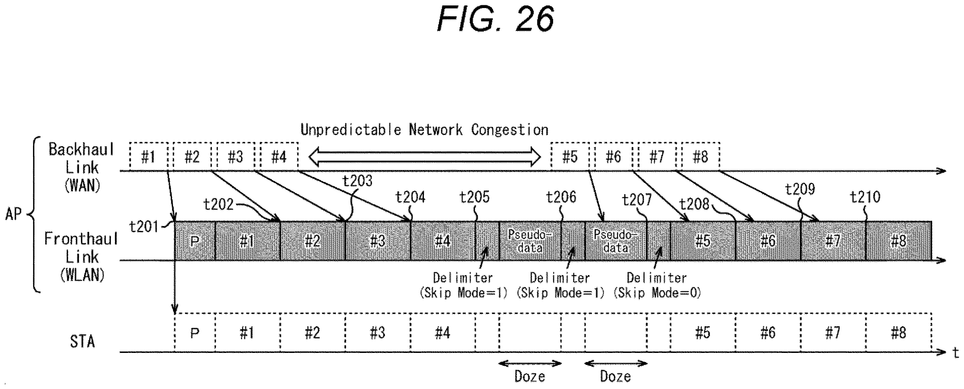

Fig. 26 is a diagram illustrating a sequence for describing a first effect example of the fifth embodiment.

Fig. 26 illustrates an example of (a) continuing Skip Mode by the MPDU Length of Delimiter.

Note that, in Fig. 26, in order to describe consistency between the packet acquired from the backhaul link (WAN) side and the packet transmitted on the fronthaul link (WLAN) side, the same number is assigned to the packets, but in practice, different packet numbers are assigned on the WAN side and the WLAN side in more cases.

Furthermore, in Fig. 26, the AP is divided into a backhaul link (WAN) side and a fronthaul link (WLAN) side.

The AP starts the direct relay transmission of the Preamble and the packet #1 to the STA at timing t201 when the packet #1 arrives from the backhaul link (WAN).

That is, at timing t201, the backhaul link (WAN) side of the AP performs the direct relay transmission described above with reference to Fig. 15 with the fronthaul link (WLAN) side.

Similarly, the AP starts the direct relay transmission of the packets #2 to #4 to the STA at timings t202 to t204 when the packets #2 to #4 arrive from the backhaul link (WAN).

Thereafter, unexpected congestion (Unpredictable Network Congestion) occurs on the backhaul link (WAN) side, the next packet #5 does not reach the backhaul link (WAN) side, and thus there is no packet that can be transmitted to the fronthaul link (WLAN) side at timing t205.

At this timing t205, the AP transmits a packet including pseudo-data (Pseudo data; all zero or random information) by including skip flag information of "Skip Mode == 1" in MPDU Delimiter immediately after the packet #4.

The STA receives the packet transmitted from the AP and checks MPDU Delimiter to determine that the packet immediately after MPDU Delimiter is pseudo data. Then, the STA operates in a power saving (doze) mode for the packet (MPDU and Padding) immediately after MPDU Delimiter.

The power saving mode described here means that at least all the reception processing in the data processing unit 144 (Fig. 5) is omitted, but if possible, some processing in the signal processing unit 143 (for example, processing after FFT processing on the reception signal) may also be omitted. Note that the lengths of the MPDU and Padding can be grasped from the MPDU Length information in the MPDU Delimiter.

Thereafter, the AP transmits the packet including pseudo-data by including skip flag information of "Skip Mode == 1" in MPDU Delimiter immediately after the completely transmitted packet, until the packet reaches the backhaul link (WAN) side.

When the unexpected congestion is resolved on the fronthaul link (WLAN) side and the packet #5 reaches the backhaul (WAN) side, the AP transmits the packet #5 to the STA by including flag information of "Skip Mode == 0" in MPDU Delimiter at timing t207 when the transmission of the immediately preceding packet is completed.

Similarly, when the packets #6 to # 8 arrive from the backhaul link (WAN), the AP starts the direct relay transmission of the packets #6 to #8 to the STA at timings t208 to t210 when the transmission of the immediately preceding packet is completed.

On the other hand, after timing t206, the STA acquires the next MPDU Delimiter, and in a case where MPDU Delimiter is "Skip Mode == 1" (for example, timing t206), the STA operates in the power saving mode for the next packet (MPDU and Padding) again. In a case of "Skip Mode == 0" (for example, timing t207), the STA performs data reception processing of the packet as in the related art.

As described above, in the example of Fig. 26, by periodically operating the STA in the power saving mode using MPDU Delimiter, it is possible to reduce the power consumption on the STA side when an unexpected situation occurs.

However, in this case, the timing when the power saving mode can be cancelled is limited to the transmission timing of MPDU Delimiter. Therefore, for example, as illustrated in Fig. 26, even after the AP can acquire the packet #5 from the backhaul (WAN) side, the STA needs to continue the power saving mode until the data transmission of the length corresponding to the MPDU Length information indicated by the current Delimiter is completed, that is, until the next MPDU Delimiter reaches the STA.

Moreover, the STA needs to periodically cancel the power saving mode in order to acquire MPDU Delimiter, and there is a concern that a power saving effect cannot be expected much when MPDU Length is short.

### <Second effect example of fifth embodiment>

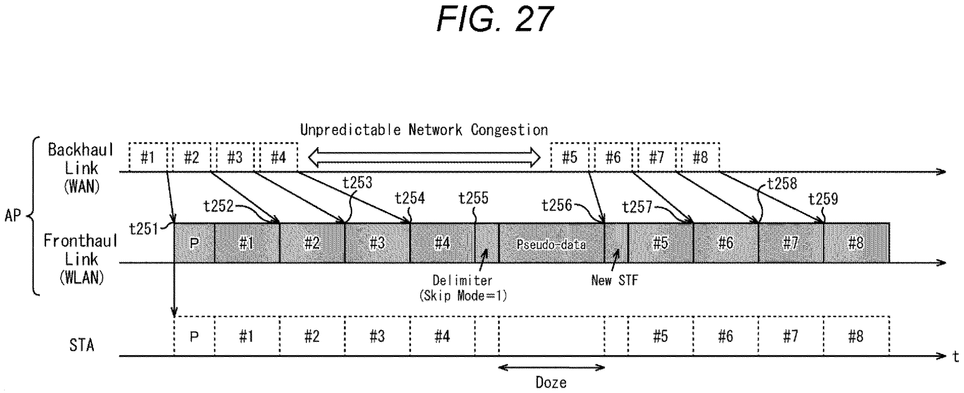

Fig. 27 is a diagram illustrating a sequence for describing a second effect example of the fifth embodiment.

In Fig. 27, an example in a case where (b) a known sequence signal (example: new STF) from the AP is transmitted, and the power saving mode of the STA is canceled is illustrated.

Note that at timings t251 to t255 and t257 to t259 of Fig. 27, processing basically similar to that at the timings t201 to t205 and t208 to t210 of Fig. 26 are performed, and thus the description thereof will be omitted.

The sequence of Fig. 27 is common to the sequence of Fig. 26 in that the AP adds flag information of "Skip Mode == 1" to MPDU Delimiter immediately after the packet #4, but is different from the sequence of Fig. 26 in that pseudo data is continuously transmitted until the packet #5 is acquired. That is, in the sequence of Fig. 27, MPDU Delimiter is not periodically transmitted.

At timing t256 in Fig. 27, when acquiring the packet #5, the AP transmits the known sequence signal to the STA and starts direct relay transmission of the packet #5.

In the power saving mode, the STA always attempts to detect the known sequence signal in the signal processing unit (PHY layer) 143, and cancels the power saving mode in a case where the detection is successfully performed.

The known sequence signal described here is, for example, a signal including a known sequence (New STF) conforming to an OFDM symbol length and a guard interval used during data transmission by improving a short training field (STF) widely used in 802.11.

Note that the same known sequence may be transmitted twice or more in order to increase detection accuracy of the known sequence through the STA. Furthermore, since the known sequence is processed by the signal processing unit (PHY layer) 143, the processing of the data processing unit (MAC layer) 144 does not need to be performed subsequently.

As described above, in the example of Fig. 27, by using the known sequence when cancelling the power saving mode, the AP can cancel the power saving mode of the STA as early as possible when acquiring the packet #5 and resume the direct relay transmission of the packet #5.

Furthermore, since the STA can continue the power saving mode for a long time, the effect of power saving can also be expected. However, the implementation difficulty level is high, for example, a new known sequence needs to be defined.

In addition to the two methods described here, a method of canceling the power saving mode of the STA may be used.

Furthermore, which one of the two is implemented may depend on the intention of the implementer of the communication system 201. In this case, the AP and the STA exchange Capability information to check which method the AP and the STA are compatible with, and select an appropriate method. In a case where both the AP and the STA are compatible with both methods, which method to select may be flexibly determined from each packet length, the remaining battery information of the STA, the past state, and the like.

### <Configuration example of A-MPDU subframe>

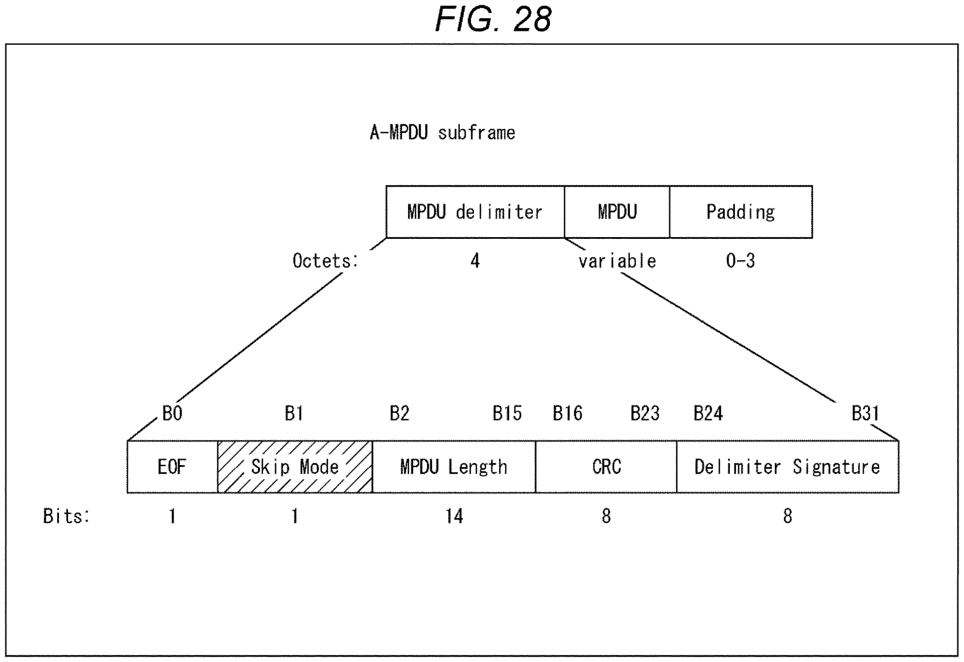

Fig. 28 is a diagram illustrating a configuration example of an A-MPDU subframe of the fifth embodiment.

Similarly to Fig. 24, MPDU Delimiter in Fig. 28 includes one bit of EOF, one bit of Skip Mode, 14 bits of MPDU Length, 8 bits of CRC, and 8 bits of Delimiter Signature.

Similar to Fig. 24. one bit of Skip Mode is skip flag information that permits skipping of the data acquisition processing. In a case where Skip Mode indicates one, the STA skips the data acquisition processing of the packet (MPDU and Padding) subsequent to MPDU Delimiter.

Note that, in Fig. 28, unlike Fig. 24, which of the above-described two methods is selected is notified by MPDU Length.

14 bits of MPDU Length indicate information regarding the length of the MPDU.

For example, in a case where Skip Mode == 1 and MPDU Length > 0, the STA operates in the power saving mode (Mode. 1) selecting the method of (a) for a time length calculated from the specified MPDU Length, and then cancels the power saving mode.

In a case where Skip Mode == 1 and MPDU Length = 0, the STA operates in the power saving mode (Mode. 2) selecting the method of (b), and continues the operation until the known sequence signal is detected.

### <Processing of AP>

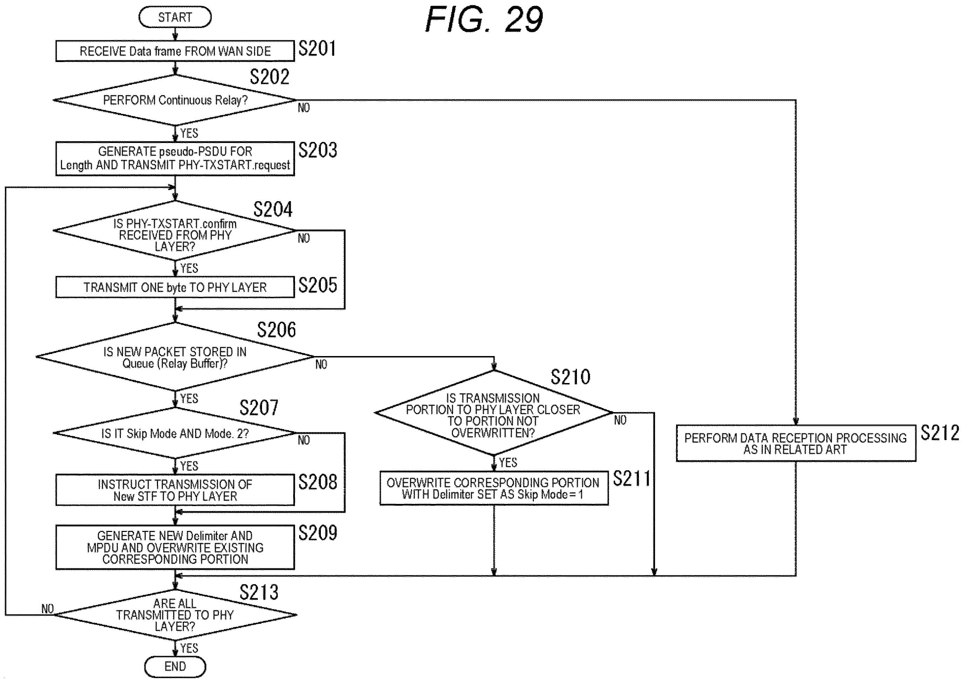

Fig. 29 is a flowchart illustrating processing of the AP in Fig. 25.

Note that the processing of Fig. 29 is processing performed by each component of the wireless communication unit 31 of the AP.

In step S201, the fronthaul link side (that is, the wireless communication unit 31) of the AP receives a data frame from the backhaul link (WAN; a WAN communication unit 34).

In step S202, the communication control unit 55 of the wireless communication unit 31 determines whether or not to perform direct relay transmission (Continuous Relay). In a case where it is determined in step S202 that the direct relay transmission is performed, the processing proceeds to step S203. That is, the processing after step S203 is direct relay transmission processing executed by the signal processing unit (PHY layer) 53 and the data processing unit (MAC layer) 54 of the wireless communication unit 31.

In step S203, the data processing unit (MAC layer) 54 generates a pseudo data frame (pseudo-PSDU) for a length determined by itself, and transmits PHY-TXSTART.request to the signal processing unit (PHY layer) 53.

In step S204, the data processing unit (MAC layer) 54 determines whether or not PHY-TXSTART.confirm from the signal processing unit (PHY layer) 53 is received. In a case where it is determined in step S204 that PHY-TXSTART.confirm is received from the signal processing unit (PHY layer) 53, the processing proceeds to step S205.

In step S205, the data processing unit (MAC layer) 54 transmits one byte of information to the signal processing unit (PHY layer) 53. Thereafter, the processing proceeds to step S206.

In a case where it is determined in step S204 that PHY-TXSTART.confirm is not received from the signal processing unit (PHY layer) 53, the processing in step S205 is skipped, and the processing proceeds to step S206.

In step S206, the data processing unit (MAC layer) 54 determines whether or not a new packet is stored in the queue managed by itself. In a case where it is determined in step S206 that the new packet is stored, the processing proceeds to step S207.

In step S207, the data processing unit (MAC layer) 54 determines whether or not the STA is in the power saving mode (Skip Mode) and in a mode (Mode. 2) of "transmitting a known sequence signal (example: New STF) from the AP and cancelling the power saving mode".

In a case where it is determined in step S207 that the STA is in a Skip Mode and is in Mode. 2, the processing proceeds to step S208.

In step S208, the data processing unit (MAC layer) 54 instructs the signal processing unit (PHY layer) 53 to transmit the known sequence signal (New STF). Thereafter, the processing proceeds to step S209.

In a case where it is determined in step S207 that the STA is not in the Skip Mode or is not in the Mode. 2, the processing in step S208 is skipped, and the processing proceeds to step S209.

In step S209, the data processing unit (MAC layer) 54 newly generates a data packet, a Delimiter for aggregation processing, and MPDU from the corresponding packet, and overwrites the corresponding portion of the pseudo data frame (pseudo-PSDU) currently stored in the data processing unit (MAC layer) 54. Thereafter, the overwritten pseudo data frame is transmitted to the STA in response to a request from the signal processing unit (PHY layer) 53.

Note that the portion to be overwritten is managed by the data processing unit (MAC layer) 54, and, is basically overwritten in order from the left side of the pseudo data frame.

Furthermore, in a case where it is determined in step S206 that the new packet is not stored in the queue, the processing proceeds to step S210.

In step S210, the data processing unit (MAC layer) 54 determines whether or not information (transmission information) to be transmitted to the signal processing unit (PHY layer) 53 is closer to a portion not yet overwritten.

That is, in a case where the timing of transmission to the signal processing unit (PHY layer) 53 is approaching without being overwritten with the new packet, it is determined in step S210 that the portion transmitted to the signal processing unit (PHY layer) 53 is closer to a portion not yet overwritten, and the processing proceeds to step S211.

In step S211, the data processing unit (MAC layer) 54 overwrites the corresponding portion with MPDU Delimiter set to Skip Mode = 1, and transmits the MPDU Delimiter to the STA in response to a request from the signal processing unit (PHY layer) 53. Thereafter, the processing proceeds to step S213.

In a case where it is determined in step S210 that the PHY transmission portion is not closer to the portion not yet overwritten, the processing proceeds to step S213.

On the other hand, in a case where it is determined in step S202 that the direct relay transmission is not performed, the processing proceeds to step S212.

In step S212, the data processing unit (MAC layer) 54 performs data reception processing as in the related art. Thereafter, the processing proceeds to step S213.

In step S213, the data processing unit (MAC layer) 54 determines whether or not all pieces of data is transmitted to the signal processing unit (PHY layer) 53. In a case where it is determined in step S210 that all pieces of data is not transmitted to the signal processing unit (PHY layer) 53, the processing returns to step S204, and the processing in subsequent steps are repeated.

In a case where it is determined in step S213 that all pieces of data is transmitted to the signal processing unit (PHY layer) 53, the processing of the AP of Fig. 29 ends.

The processing A including steps S204 and S205, the processing B including YES in step S206 and steps S207 to S209, and the processing C including NO in step S206 and steps S210 and S211 may not be performed in the order of the flowchart, and each processing may be performed as necessary.

### <Processing of STA>

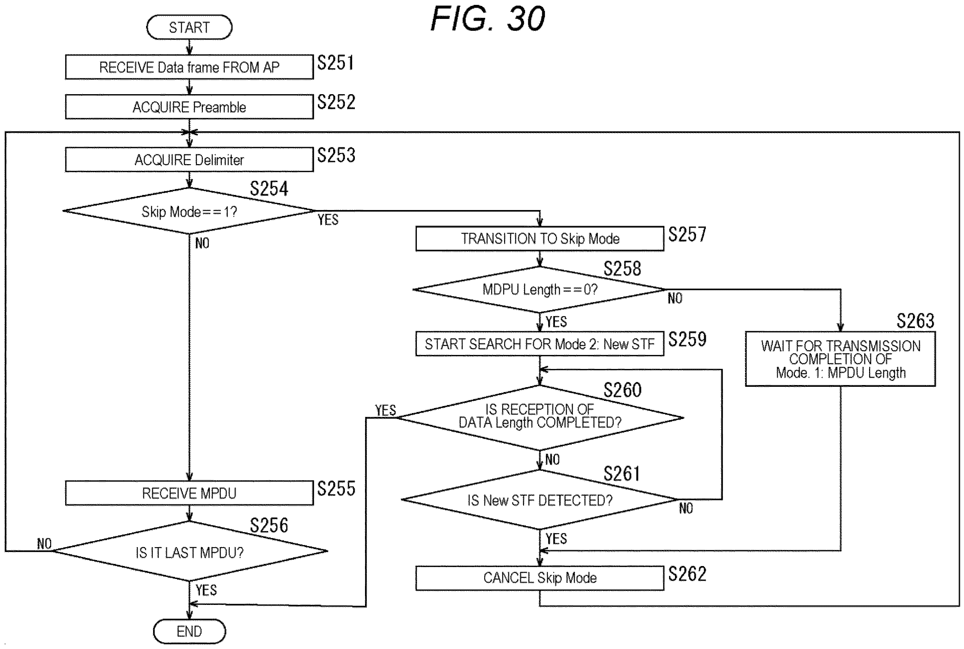

Fig. 30 is a flowchart illustrating processing of the STA in Fig. 25.

Note that the processing of Fig. 30 is processing performed by the communication control unit 145 of the STA controlling each component of the wireless communication unit 121.

In step S251, the communication control unit 145 of the STA receives the data frame from the AP.

In step S252, the communication control unit 145 acquires a Preamble from the received data frame.

In step S253, the communication control unit 145 acquires Delimiter.

In step S254, the communication control unit 145 checks the acquired Delimiter and determines whether or not Skip Mode == 1. In a case where it is determined in step S254 that Skip Mode == 0, the processing proceeds to step S255.

In step S255, the communication control unit 145 receives MPDU as in the related art.

In step S256, the communication control unit 145 determines whether or not the received MPDU is the last MPDU. In a case where it is determined in step S256 that the received MPDU is not the last MPDU, the processing returns to step S253, and the processing in subsequent steps are repeated.

In step S256, in a case where the received MPDU is the last MPDU, the processing in Fig. 30 ends.

On the other hand, in a case where it is determined in step S254 that Skip Mode == 1, the processing proceeds to step S257.

In step S257, the communication control unit 145 enters the power saving mode (Skip Mode).

In step S258, the communication control unit 145 checks Delimiter and determines whether or not MPDU Length = 0. In a case where it is determined in step S258 that MPDU Length = 0, the processing proceeds to step S259.

In step S259, the communication control unit 145 operates in the mode (Mode. 2) of "transmitting the known sequence signal (New STF) from the AP and cancelling the power saving mode" and starts to search for a known sequence signal (New STF).

In step S260, the communication control unit 145 determines whether or not reception for a data length (DATA Length) indicated by MPDU Length is completed. In a case where it is determined in step S260 that the data length (DATA Length) indicated by the MPDU Length ends, the processing of Fig. 30 ends.

In a case where it is determined in step S260 that the data length (DATA Length) indicated by MPDU Length does not end, the processing proceeds to step S261.

In step S261, the communication control unit 145 determines whether or not the known sequence signal (New STF) is detected. In a case where it is determined in step S261 that the known sequence signal (New STF) is not detected, the processing returns to step S260, and the processing in subsequent steps are repeated.

In a case where it is determined in step S261 that the known sequence signal (New STF) is detected, the processing proceeds to step S262.

In step S262, the communication control unit 145 cancels the power saving mode (Skip Mode). Thereafter, the processing returns to step S253, and the processing in subsequent steps are repeated.

In a case where it is determined in step S258 that MPDU Length is not zero, the processing proceeds to step S263.

In step S263, the communication control unit 145 operates in the mode (Mode. 1) of "continuing the power saving mode for MPDU Length of Delimiter" and waits for completion of transmission of MPDU Length.

Even after the transmission of MPDU Length is completed, the power saving mode (Skip Mode) is cancelled in step S262, and thereafter, the processing returns to step S253, and the processing in subsequent steps are repeated.

The processing A including NO in steps S254, step S255, and step S256, the processing B including YES in step S254, step S257, YES in step S258, and steps S259 to S262, and the processing C including YES in step S254, step S257, NO in step S258, and step S263 may not be performed in the order of the flowchart, and each processing may be performed as necessary.

### <7. Others>

### <Effects of present technology>

In the present technology, the direct relay transmission is performed in which the pseudo-PSDU that is a pseudo data frame, in which the packet of the data signal transmitted from a first another wireless communication device (Source Node or STA) is set as another information, is generated, and each received packet for which error detection is performed is overwritten on each pseudo data frame to generate a data frame, and the data frame is sequentially output, and control is performed in which the sequentially output data frames are transmitted to a second another wireless communication device (STA or Source Node).

Furthermore, in the present technology, the direct relay transmission is performed in which the pseudo data frame, in which the packet of the data signal transmitted from the communication device (Source Node, AP, or STA) is set as another information, is generated, information based on each received packet for which error detection is performed is overwritten on each pseudo data frame to generate a data frame, and the data frame is sequentially output, and control is performed in which the sequentially output data frames are transmitted to another wireless communication device (STA or Source Node).

Moreover, in the present technology, during reception processing of the data frame from another wireless communication device (Source Node or AP), an information group including information for permitting skipping of a part of the reception processing of the data frame is acquired, and at least a part of the reception processing of the data frame is skipped

According to the present technology, it is possible to perform direct relay transmission in which while a data frame is being received on one link, the same data frame is relayed on the other link. Since this direct relay transmission has an effect of reducing the standby time and the number of times of transmission on the relay destination link as much as possible, an effect of reducing the transmission delay and improving the effective throughput in relay communication can be expected.

Moreover, unlike the method of the related art, by performing direct relay transmission after performing error detection on each data packet, it can be expected that transmission of another packet is performed beforehand or reliability is improved by retransmission of the previously transmitted packet without directly transmitting a damaged packet before relay. Furthermore, since the damaged packet is not transmitted as it is before the relay but is emptied and transmitted, and a part of the reception processing is skipped on the reception side, an effect of power saving on the reception side can be expected.

In the direct relay transmission of the present technology, it is also possible to flexibly determine whether or not to be capable of execution and the number of times of execution in consideration of the channel state of each link, the data rate information to be used, the packet error occurrence rate, and the like.

Note that, in the sequence diagrams of all the embodiments, the transmission timing and the reception timing are exactly different from each other due to the propagation time, but in order to make the easy-to-understand description, it is described in the present description that there is no error in the transmission/reception timing.

### <Configuration example of computer>

The series of processing described above can be executed by hardware and also can be executed by software. In a case where the series of processing is executed by software, a program constituting the software is installed on a computer built into dedicated hardware or a general-purpose personal computer from a program recording medium.

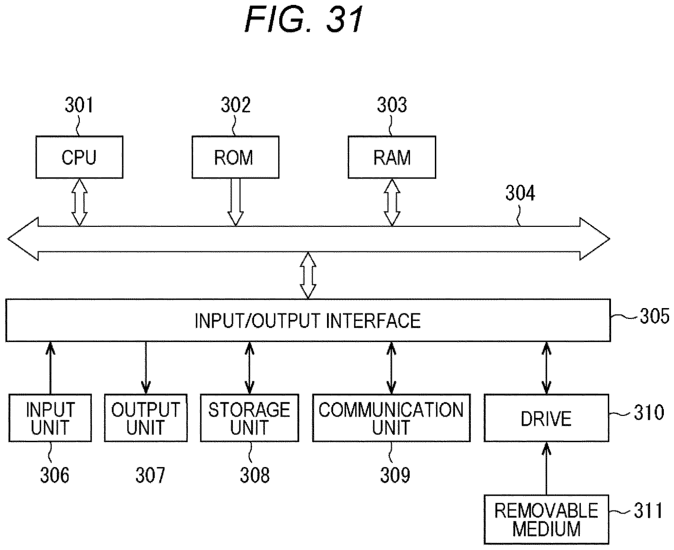

Fig. 31 is a block diagram illustrating a configuration example of hardware of a computer that executes the above-described series of processing by a program.

A central processing unit (CPU) 301, a read only memory (ROM) 302, and a random access memory (RAM) 303 are mutually connected by a bus 304.

Moreover, an input/output interface 305 is connected to the bus 304. An input unit 306 including a keyboard and a mouse, and an output unit 307 including a display and a speaker are connected to the input/output interface 305. Furthermore, a storage unit 308 including a hard disk and a nonvolatile memory, a communication unit 309 including a network interface, and a drive 310 that drives a removable medium 311 are connected to the input/output interface 305.

In the computer configured as described above, the series of processing described above is performed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting, and is installed in the storage unit 308.

Note that the program executed by the computer may be a program that executes processing in time series in the order described herein, or a program that executes processing in parallel or at a necessary timing such as when a call is made.

Note that, in the present specification, a system means an assembly of a plurality of components (devices, modules (parts), and the like), and it does not matter whether or not all the components are located in the same housing. Therefore, a plurality of devices housed in separate housings and connected via a network and one device in which a plurality of modules is housed in one housing are both systems.

Furthermore, the effects described in the present description are merely examples and not restrictive, and there may also be other effects.

An embodiment of the present technology is not limited to the above-described embodiment, and various modifications can be made without departing from the scope of the present technology.

For example, the present technology may be configured as cloud computing in which one function is shared by a plurality of devices via a network and processing is executed in cooperation.

Furthermore, each step described in the flowchart described above may be executed by one device, or may be executed in a shared manner by a plurality of devices.

Moreover, in a case where a plurality of processing steps is included in one step, the plurality of processing included in the one step can be performed by one device or shared and performed by a plurality of devices.

### <Example of configuration combinations>

The present technology may also have the following configurations.
(1) A wireless communication device including:
   a data processing unit that performs direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and
   a communication control unit that performs control to transmit the sequentially output data frames to a second another wireless communication device.
(2) The wireless communication device according to (1), in which
   before performing the direct relay transmission, the communication control unit performs control to receive a direct relay request signal for requesting the direct relay transmission, the direct relay request signal including information regarding a destination of the packet and a data rate of communication with the first another wireless communication device, and the information being transmitted from the first another wireless communication device.
(3) The wireless communication device according to (2), in which
   the communication control unit performs control to determine whether or not to permit the direct relay transmission in response to the direct relay request signal on the basis of at least one of a channel state of communication with the second another wireless communication device or a buffer state of the communication control unit, and transmit a direct relay response signal for responding to the direct relay request signal.
(4) The wireless communication device according to any one of (1) to (3), in which
   in the direct relay transmission, in a case where a position of a first portion in the pseudo data frame, which is requested to be output from a physical layer, is closer to a position of a second portion which is not yet overwritten with information based on the packet than a threshold, the data processing unit fixes the second portion as it is.
(5) The wireless communication device according to any one of (1) to (3), in which
   in the direct relay transmission, in a case where a position of a first portion in the pseudo data frame, which is requested to be output from a physical layer, is closer to a position of a second portion which is not yet overwritten with information based on the packet than a threshold, the data processing unit overwrites the second portion with information based on the overwritten packet.
(6) The wireless communication device according to any one of (1) to (3), in which
   the communication control unit performs control to transmit an interruption request signal for requesting interruption of the direct relay transmission to the first another wireless communication device.
(7) The wireless communication device according to (6), in which
   the communication control unit performs control to transmit the interruption request signal to the first another wireless communication device in a case where the packets to be transmitted or retransmitted to the second another wireless communication device are accumulated by a threshold or more.
(8) The wireless communication device according to any one of (1) to (3), in which
   the data processing unit acquires identification information, the number of packets, and a data frame length in the direct relay transmission, on the basis of information included in the data signal.
(9) The wireless communication device according to any one of (1) to (3), in which
   in the direct relay transmission, the data processing unit generates the pseudo data frame including a packet portion in which the packet stored in a buffer of the data processing unit is set and a pseudo portion in which the another information is set, overwrites the pseudo portion of the pseudo data frame with information based on each received packet for which error detection is performed to generate a data frame, and sequentially outputs the data frame.
(10) A wireless communication method including:
   by a wireless communication device,
   performing direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and
   performing control to transmit the sequentially output data frames to a second another wireless communication device.
(11) A wireless communication device including
   a communication control unit that performs control to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to relay transmission to a first another wireless communication device to the second another wireless communication device.
(12) The wireless communication device according to (11), in which
   the direct relay request signal includes information regarding a destination of the packet and a data rate of communication with the second another wireless communication device.
(13) The wireless communication device according to (11) or (12), in which
   the communication control unit performs control to perform transmission by including identification information, the number of packets, and a data frame length in the direct relay transmission in the data signal.
(14) The wireless communication device according to any one of (11) to (13), in which
   the communication control unit performs control to perform transmission by including a length of each packet in the data signal.
(15) A wireless communication method including
   by a wireless communication device,
   performing control to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to relay transmission to a first another wireless communication device to the second another wireless communication device.
(16) A wireless communication device including:
   a data processing unit that performs direct relay transmission in which a pseudo data frame, in which a packet of a data signal transmitted from a communication device is set as another information, is generated, information based on each received packet for which error detection is performed is overwritten on each pseudo data frame to generate a data frame, and the data frame is sequentially output; and
   a communication control unit that performs control to transmit the sequentially output data frames to another wireless communication device.
(17) The wireless communication device according to (16), in which
   in the direct relay transmission, in a case where a position of a first portion in the pseudo data frame, which is requested to be output from a physical layer, is closer to a position of a second portion which is not yet overwritten with information based on the packet than a threshold, the data processing unit overwrites the second portion with an information group including information for permitting the another wireless communication device to skip at least a part of reception processing of the data frame.
(18) The wireless communication device according to (17), in which
   the communication control unit generates a known sequence signal for notifying the another wireless communication device, which has notified the information group, of resuming normal reception processing, and inserts the known sequence signal into the data frame.
(19) A wireless communication method including:
   performing direct relay transmission in which a pseudo data frame, in which a packet of a data signal transmitted from a communication device is set as another information, is generated, information based on each received packet for which error detection is performed is overwritten on each pseudo data frame to generate a data frame, and the data frame is sequentially output; and
   performing control to transmit the sequentially output data frames to an another wireless communication device.
(20) A Wireless communication device including
   a data processing unit that acquires an information group including information for permitting skipping of at least a part of reception processing of the data frame during the reception processing of the data frame from another wireless communication device, and skips at least a part of the reception processing of the data frame.
(21) The wireless communication device according to (20), further including
   a communication control unit that calculate and set a time for continuing skipping of at least a part of the reception processing of the data frame on the basis of information regarding a packet length included in the information group.
(22) The wireless communication device according to (20), further including
   a communication control unit that continues skipping of at least a part of the reception processing of the data frame until a known sequence signal inserted in the middle of the data frame transmitted from the another wireless communication device is detected.
(23) A wireless communication method including
   acquiring an information group including information for permitting skipping of at least a part of reception processing of a data frame during the reception processing of the data frame from another wireless communication device and skipping at least a part of the reception processing of the data frame.

### REFERENCE SIGNS LIST

- 1: Wireless communication system
- 11: Communication device
- 31: Wireless communication unit
- 32: Control unit
- 33: Storage unit
- 34: WAN communication unit
- 54, 54-1, 54-2: Data processing unit
- 55: Communication control unit
- 56: Communication storage unit
- 61: Communication device
- 71: Wireless communication unit
- 72: Control unit
- 93, 93-1, 93-2: Signal processing unit
- 94: Data processing unit
- 94-1, 94-2: Individual data processing unit
- 94-3: Common data processing unit
- 95: Communication control unit
- 96: Communication storage unit
- 102: Relay Buffer
- 111: Communication device
- 121: Wireless communication unit
- 122: Control unit
- 123: Storage unit
- 201: Communication system

## Claims

1. A wireless communication device comprising:
a data processing unit that performs direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and
a communication control unit that performs control to transmit the sequentially output data frames to a second another wireless communication device.

2. The wireless communication device according to claim 1, wherein
before performing the direct relay transmission, the communication control unit performs control to receive a direct relay request signal for requesting the direct relay transmission, the direct relay request signal including information regarding a destination of the packet and a data rate of communication with the first another wireless communication device, and the information being transmitted from the first another wireless communication device.

3. The wireless communication device according to claim 2, wherein
the communication control unit performs control to determine whether or not to permit the direct relay transmission in response to the direct relay request signal on a basis of at least one of a channel state of communication with the second another wireless communication device or a buffer state of the communication control unit, and transmit a direct relay response signal for responding to the direct relay request signal.

4. The wireless communication device according to claim 1, wherein
in the direct relay transmission, in a case where a position of a first portion in the pseudo data frame, which is requested to be output from a physical layer, is closer to a position of a second portion which is not yet overwritten with information based on the packet than a threshold, the data processing unit fixes the second portion as it is.

5. The wireless communication device according to claim 1, wherein
in the direct relay transmission, in a case where a position of a first portion in the pseudo data frame, which is requested to be output from a physical layer, is closer to a position of a second portion which is not yet overwritten with information based on the packet than a threshold, the data processing unit overwrites the second portion with information based on the overwritten packet.

6. The wireless communication device according to claim 1, wherein
the communication control unit performs control to transmit an interruption request signal for requesting interruption of the direct relay transmission to the first another wireless communication device.

7. The wireless communication device according to claim 6, wherein
the communication control unit performs control to transmit the interruption request signal to the first another wireless communication device in a case where the packets to be transmitted or retransmitted to the second another wireless communication device are accumulated by a threshold or more.

8. The wireless communication device according to claim 1, wherein
the data processing unit acquires identification information, the number of packets, and a data frame length in the direct relay transmission, on a basis of information included in the data signal.

9. The wireless communication device according to claim 1, wherein
in the direct relay transmission, the data processing unit generates the pseudo data frame including a packet portion in which the packet stored in a buffer of the data processing unit is set and a pseudo portion in which the another information is set, overwrites the pseudo portion of the pseudo data frame with information based on each received packet for which error detection is performed to generate a data frame, and sequentially outputs the data frame.

10. A wireless communication method comprising:
by a wireless communication device,
performing direct relay transmission in which a pseudo data frame, in which a packet of a data signal transmitted from a first another wireless communication device is set as another information, is generated, information based on each received packet for which error detection is performed is overwritten on each pseudo data frame to generate a data frame, and the data frame is sequentially output; and
performing control to transmit the sequentially output data frames to a second another wireless communication device.

11. A wireless communication device comprising
a communication control unit that performs control to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to make the second another wireless communication device relay transmission to a first another wireless communication device.

12. The wireless communication device according to claim 11, wherein
the direct relay request signal includes information regarding a destination of the packet and a data rate of communication with the second another wireless communication device.

13. The wireless communication device according to claim 11, wherein
the communication control unit performs control to perform transmission by including identification information, the number of packets, and a data frame length in the direct relay transmission in the data signal.

14. The wireless communication device according to claim 11, wherein
the communication control unit performs control to perform transmission by including a length of each packet in the data signal.

15. A wireless communication method comprising
by a wireless communication device,
performing control to transmit, to a second another wireless communication device, a direct relay request signal for requesting direct relay transmission in which a pseudo data frame, in which a packet of a data signal transmitted is set as another information, is generated, information based on each received packet for which error detection is performed is overwritten on each pseudo data frame to generate a data frame, and the data frame is sequentially output, in order to make the second another wireless communication device relay transmission to a first another wireless communication device.
